# EUROPEAN PATENT APPLICATION

(11) **EP 4 647 278 A1**
(43) Date of publication of application: **12.11.2025**
(21) Application number: 24792629.8
(22) Date of filing: 15.04.2024
(51) Int. Cl.: B60K 1/00, B60K 11/02

(54) **VEHICLE DRIVE DEVICE**

(30) Priority: 21.04.2023 JP 2023070005
(71) Applicant: AISIN CORPORATION, Kariya-shi, Aichi 448-8650 (JP)
(72) Inventor: IWATA Takashi, Kariya-shi, Aichi 448-8650 (JP); MAEDA Takuyo, Kariya-shi, Aichi 448-8650 (JP); SUYAMA Daiki, Kariya-shi, Aichi 448-8650 (JP)
(74) Representative: Kramer Barske Schmidtchen Patentanwälte PartG mbB
(86) International application number: PCT/JP2024/014959
(87) International publication number: WO 2024/219354

(57) **Abstract**

In an onboard state, a drive unit (TA) is arranged on a front-rear-direction first side (H1) with respect to a cabin air conditioning unit (45) and an onboard battery (BT). A refrigerant circuit module (2) is arranged on an upper side (Z1) or a front-rear-direction second side (H2) with respect to the drive unit (TA). An inverter module (4) is arranged on at least any one side of the upper side (Z1), a lower side (Z2), the front-rear-direction second side (H2), a width-direction first side, and a width-direction second side with respect to the drive unit (TA). A power supply module (4) is arranged at least any one side of the upper side (Z1), the lower side (Z2), the front-rear-direction second side (H2), the width-direction first side, and the width-direction second side with respect to the drive unit (TA), where the at least any one side is the same side as a side on which the inverter module (4) is arranged, or a side contiguous to a side on which the inverter module (4) is arranged, with respect to the drive unit (TA).

## Description

### TECHNICAL FIELD

The present invention relates to a vehicle drive device.

### BACKGROUND ART

JP 2019-170077 A discloses a vehicle drive device (1) including a rotary electric machine (a rotor (20), a stator (30)) serving as a drive power source for wheels (803, 804), a drive control device (131) that performs drive control on the rotary electric machine, a charger (136) that charges an onboard battery (805) connected to the rotary electric machine through the drive control device (131), with electric power supplied from an external power supply (900), and a case (10) that houses the rotary electric machine, the drive control device (131), and the charger (136) (in the BACKGROUND ART, the reference signs in parentheses are those in the literature referred to). In the case (10), a first housing chamber in which the rotary electric machine is housed is formed on a lower side in an upper-lower direction (Z) in an onboard posture in which the vehicle drive device (1) is mounted on the vehicle, and a second housing chamber in which the drive control device (131) and the charger (136) are housed is formed on an upper side in the upper-lower direction (Z). The first housing chamber is formed inside a cylindrical peripheral wall portion (10b) of the case (10). The second housing chamber is formed as a rectangular box-shaped space inside a rectangular tubular portion (10e), having a rectangular tubular shape, that is adjacent to an upper side of the peripheral wall portion (10b) in the upper-lower direction (Z), on a radially outer side of the peripheral wall portion (10b). The peripheral wall portion (10b) is formed with a cooling portion (60) in which a cooling flow passage is further formed through which a refrigerant flows along the peripheral wall portion (10b).

The cooling flow passage formed along the peripheral wall portion (10b) has an inlet port (16) through which the refrigerant flows in and an outlet port (17) through which the refrigerant flows out, on the rectangular tubular portion (10e) side. The drive control device (131) is arranged on a side of the flow passage of the refrigerant close to the inlet port (16), that is, on the upstream side of the flow passage of the refrigerant, and the charger (136) is arranged on a side of the flow passage of the refrigerant close to the outlet port (17), that is, on the downstream side of the flow passage of the refrigerant. As a result, the drive control device (131), which generates heat during the driving of the rotary electric machine, can be efficiently cooled by the cold refrigerant. The charging of the onboard battery (805) using the external power supply (900) is performed while the vehicle is stopped, and thus the temperature of the refrigerant is less likely to increase even through heat exchange with the drive control device (131), and the charger (136) is appropriately cooled even though the charger

(136) is arranged on the downstream side of the flow passage of the refrigerant. In addition, a reactor (140) and a smoothing capacitor (141) used for improving a power factor of a power system or stabilizing a voltage are also arranged along the flow passage of the refrigerant, and are appropriately cooled by the refrigerant.

### CITATION LIST

### PATENT LITERATURE

Patent Literature 1: JP 2019-170077 A

### SUMMARY OF INVENTION

### TECHNICAL PROBLEMS

As described above, the vehicle drive device disclosed in the literature described above includes a cooling structure that can efficiently cool a plurality of cooling targets. However, in a vehicle, there are other devices to be subjected to heat management, such as an onboard air conditioner. Therefore, the cooling structure is preferably constructed in consideration of the onboard air conditioner as well as a relationship with the drive control device and the charger. In addition, since the onboard battery connected to the rotary electric machine has a high voltage and a large power capacity, the weight per unit length of each wiring line connecting the charger and the onboard battery also tends to increase. The energy efficiency of the vehicle tends to be increased as the vehicle is lighter. Therefore, it is preferable to make compact the entire onboard member group including the vehicle drive device as a core, in consideration of connection members connecting the onboard air conditioner or the onboard battery and the vehicle drive device.

In view of the above background, it is desired to provide a technique with which an entirety of an onboard member group including a vehicle drive device as a core and including an onboard air conditioner and an onboard battery is configured to be compact.

### SOLUTIONS TO PROBLEMS

A vehicle drive device in view of the above includes: a rotary electric machine including a rotor; an output member drivingly coupled to a wheel; a power transmission mechanism configured to transmit drive power between the rotary electric machine and the output member; an inverter module for performing drive control on the rotary electric machine; a power supply module electrically connected to an onboard battery, the power supply module including at least one of a voltage conversion circuit configured to convert a voltage of the onboard battery, a charging circuit for charging the onboard battery from an external power supply, and a feeding circuit for feeding electric power from the onboard battery to an outside; a refrigerant circuit module forming at least a part of a refrigerant circuit through which a refrigerant for an onboard air conditioner is allowed to circulate; and a case that houses a drive unit including the rotary electric machine and the power transmission mechanism, and that supports the inverter module, the power supply module, and the refrigerant circuit module, in which: in a state of being mounted on a vehicle, the drive unit is arranged on a front-rear-direction first side that is one side in a vehicle front-rear direction, with respect to a cabin air conditioning unit of the onboard air conditioner, and the onboard battery arranged under a floor of a cabin of the vehicle; a side opposite to the front-rear-direction first side, in the vehicle front-rear direction is defined as a front-rear-direction second side, a direction orthogonal to the vehicle front-rear direction as viewed in an upper-lower direction is defined as a width direction, one side in the width direction is defined as a width-direction first side, and another side in the width direction is defined as a width-direction second side; the refrigerant circuit module is arranged on an upper side or the front-rear-direction second side with respect to the drive unit; the inverter module is arranged on at least any one side of the upper side, a lower side, the front-rear-direction second side, the width-direction first side, and the width-direction second side with respect to the drive unit; and the power supply module is arranged on at least any one side of the upper side, the lower side, the front-rear-direction second side, the width-direction first side, and the width-direction second side with respect to the drive unit, the at least any one side being a same side as a side on which the inverter module is arranged, or a side contiguous to a side on which the inverter module is arranged, with respect to the drive unit.

According to this configuration, there is provided the vehicle drive device in which not only is the inverter module, for performing drive control on the rotary electric machine, provided integrally with the drive unit including the rotary electric machine and the power transmission mechanism, but also the power supply module and the refrigerant circuit module, through which the refrigerant for the onboard air conditioner circulates, are provided integrally with the drive unit. Therefore, it is possible to reduce the number of wiring lines, pipes, or the like connecting a unit formed of the drive unit and the inverter module and each of the power supply module and the refrigerant circuit module. In addition, by allowing not only the drive unit and the inverter module but also the power supply module and the refrigerant circuit module to be integrally supported by the case, it is possible to obtain the vehicle drive device integrated while being provided with many functions, and it is also easy to make compact the entire onboard member group including the vehicle drive device as a core. Further, the cabin air conditioning unit is often typically arranged on the upper side with respect to the drive unit, in relation to introduction of outside air and supply of air into the vehicle interior. According to this configuration, the refrigerant circuit module is arranged on the upper side with respect to the drive unit, or on the front-rear-direction second side on which the cabin air conditioning unit is arranged, with respect to the drive unit, it is easy to reduce a distance between the refrigerant circuit module and the cabin air conditioning unit, and it is easy to shorten pipes connecting the refrigerant circuit module and the cabin air conditioning unit. In addition, according to this configuration, the inverter module and the power supply module are arranged on a side other than the front-rear-direction first side that is a side opposite to the side on which the onboard battery is arranged, with respect to the drive unit. Therefore, it is easy to reduce a distance between each of the inverter module and the power supply module and the onboard battery, and it is also easy to shorten wiring lines connecting each of the inverter module and the power supply module and the onboard battery. Further, according to this configuration, since the power supply module is arranged on the same side as the side on which the inverter module is arranged, or the side contiguous to the side on which the inverter module is arranged, it is also easy to shorten wiring lines connecting the power supply module and the inverter module. That is, according to this configuration, it is easy to shorten pipes or wiring lines connecting the vehicle drive device and each of the cabin air conditioning unit and the onboard battery. Therefore, according to this configuration, it is easy to configure the entire onboard member group including the vehicle drive device as a core and including the onboard air conditioner and the onboard battery to be compact.

Further features and advantages of the vehicle drive device will become apparent from the description of exemplary and non-limiting embodiments given below with reference to the drawings.

### BRIEF DESCRIPTION OF DRAWINGS

FIG. 1 is an exploded perspective view of a vehicle drive device.
FIG. 2 is a skeleton diagram of a drive unit.
FIG. 3 is a schematic control block diagram of the vehicle drive device.
FIG. 4 is a diagram schematically showing a refrigerant circuit and cooling water circuits.
FIG. 5 is a perspective view schematically showing an example of circuit modules.
FIG. 6 is a side view schematically showing a first example of a relative arrangement of an onboard member group.
FIG. 7 is a perspective view schematically showing the first example of the relative arrangement of the onboard member group.
FIG. 8 is a side view schematically showing a second example of the relative arrangement of the onboard member group.
FIG. 9 is a side view schematically showing a third example of the relative arrangement of the onboard member group.
FIG. 10 is a side view schematically showing a fourth example of the relative arrangement of the onboard member group.
FIG. 11 is a side view schematically showing a fifth example of the relative arrangement of the onboard member group.
FIG. 12 is a side view schematically showing a sixth example of the relative arrangement of the onboard member group.
FIG. 13 is a side view schematically showing a seventh example of the relative arrangement of the onboard member group.
FIG. 14 is a side view schematically showing an eighth example of the relative arrangement of the onboard member group.
FIG. 15 is a side view schematically showing a ninth example of the relative arrangement of the onboard member group.
FIG. 16 is a side view schematically showing a tenth example of the relative arrangement of the onboard member group.

### DESCRIPTION OF EMBODIMENTS

Hereinafter, embodiments of a vehicle drive device will be described with reference to the drawings. A vehicle drive device 100 of the present embodiment appropriately configures a heat management system in a vehicle with the vehicle drive device 100 as a core while suppressing an increase in size. Further, the vehicle drive device 100 allows the entire onboard member group including the vehicle drive device 100 as a core and including an onboard air conditioner and an onboard battery to be configured to be compact. For example, in a small vehicle such as an A-segment vehicle in Europe and the like, or a light vehicle in Japan, it is required to improve its mounting efficiency by making compact the onboard components and reducing the weight of the onboard components as much as possible, including the vehicle drive device 100. For example, it is also preferable to reduce the length of connection components such as wiring lines and pipes by arranging the onboard components close to each other, or to reduce the number of wiring lines and pipes by integrating different devices.

Further, heat in cooling water for cooling a device that generates heat in a vehicle, such as a drive power source for wheels, is discharged by a radiator, but the radiator is typically arranged in the most front portion of the vehicle in order to discharge the heat using air along with traveling. Moreover, in a small vehicle such as an A-segment vehicle, in order to allocate a space inside the vehicle on which an occupant rides, the vehicle is often driven with front wheels, and the drive power source for the wheels is also arranged in a front portion of the vehicle. Further, in a vehicle on which an onboard air conditioner that performs cooling, heating, and the like is mounted, the onboard air conditioner, and a large portion of a flow passage through which a refrigerant used in the onboard air conditioner flows, and functional components that perform heat exchange are also arranged in the front portion of the vehicle. In particular, regarding heating, in a conventional vehicle in which an internal combustion engine is used as a drive power source for wheels, it has been easy to use the internal combustion engine as a heat source. However, in a vehicle such as an electric vehicle having no internal combustion engine, since there is no such a heat source, a heat pump system is mainly used for heating, and the number of mounted components tends to increase as compared with a system using discharged heat of the internal combustion engine. By appropriately performing plumbing and wiring arrangements on these onboard components within a limited space in the front portion of the vehicle, a space available for a vehicle interior or the like can be expanded. The vehicle drive device 100 of the present embodiment allows the functional components that perform heat management using cooling water and a refrigerant in this manner to be configured integrally with the vehicle drive device 100.

Further, in an electric vehicle or the like, a rotary electric machine is used as a drive power source for wheels, and electric power is supplied from an onboard battery to the rotary electric machine. Since the onboard battery connected to the rotary electric machine has a high voltage and a large power capacity, the weight per unit length of a wiring line connecting a charger and the onboard battery also tends to increase. The energy efficiency of the vehicle tends to be increased as the vehicle is lighter. Therefore, it is preferable to take into consideration the length or the like of a connection member connecting the onboard battery and the vehicle drive device as well as consideration of the onboard air conditioner. In the present embodiment, the entire onboard member group including the vehicle drive device 100 as a core and including the onboard air conditioner and the onboard battery is configured to be compact, whereby compactness, weight reduction, and cost reduction in onboard components are achieved.

Hereinafter, preferred embodiments of such a vehicle drive device 100 will be described, and first, a function as a drive unit TA for driving wheels W will be described.

Note that, as used herein, the phrase "drivingly coupled" refers to a state in which two rotary elements are coupled to be able to transmit drive power, and includes a state in which the two rotary elements are coupled to rotate integrally or a state in which the two rotary elements are coupled to be able to transmit drive power through one, or two or more transmission members. Examples of such a transmission member include various members that transmit rotation at the same speed or at a shifted speed, such as a shaft, a gear mechanism, a belt, and a chain. Note that the transmission member may include an engagement device that selectively transmits rotation and drive power, such as a friction engagement device or a meshing-type engagement device. However, when the phrase "drivingly coupled" is used for each rotary element of a planetary gear mechanism, the phrase "drivingly coupled" refers to a state in which the plurality of rotary elements in the planetary gear mechanism are coupled to each other not through any other rotary element therebetween. In addition, as used herein, the phrase "rotate integrally" means to rotate integrally regardless of whether to be separable or inseparable. That is, a plurality of members that rotate integrally may be integrally formed of the same member, or may be formed of different members and integrated through welding, spline coupling, or the like. Further, as used herein, with respect to the arrangement of two elements, the phrase "overlap as viewed in a specific direction" means that when an imaginary straight line parallel to the direction of the view is moved in each direction orthogonal to the imaginary straight line, a region where the imaginary straight line intersects both of the two elements exists at least in part.

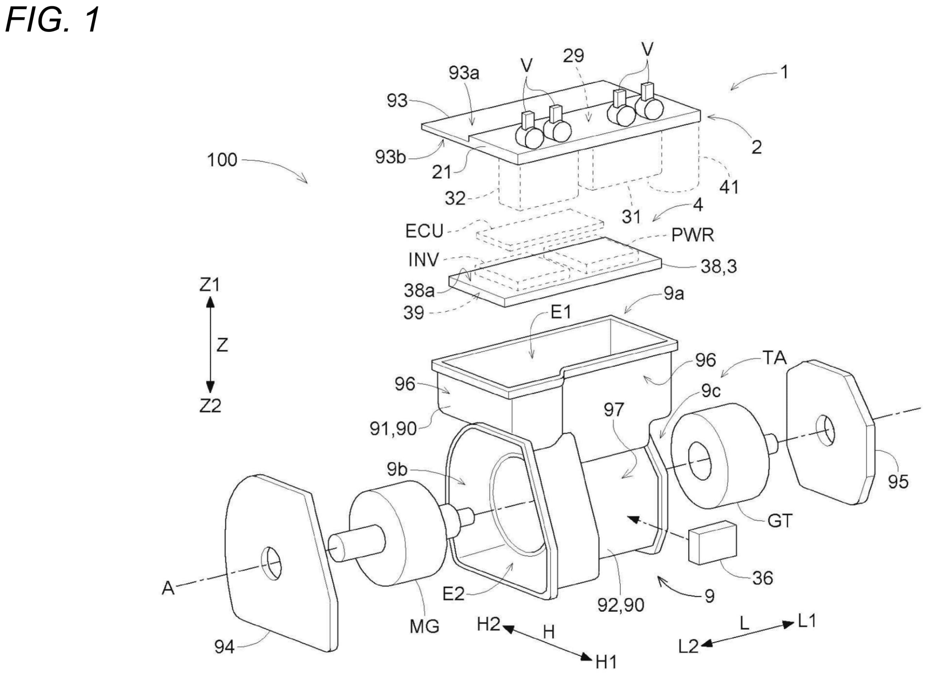

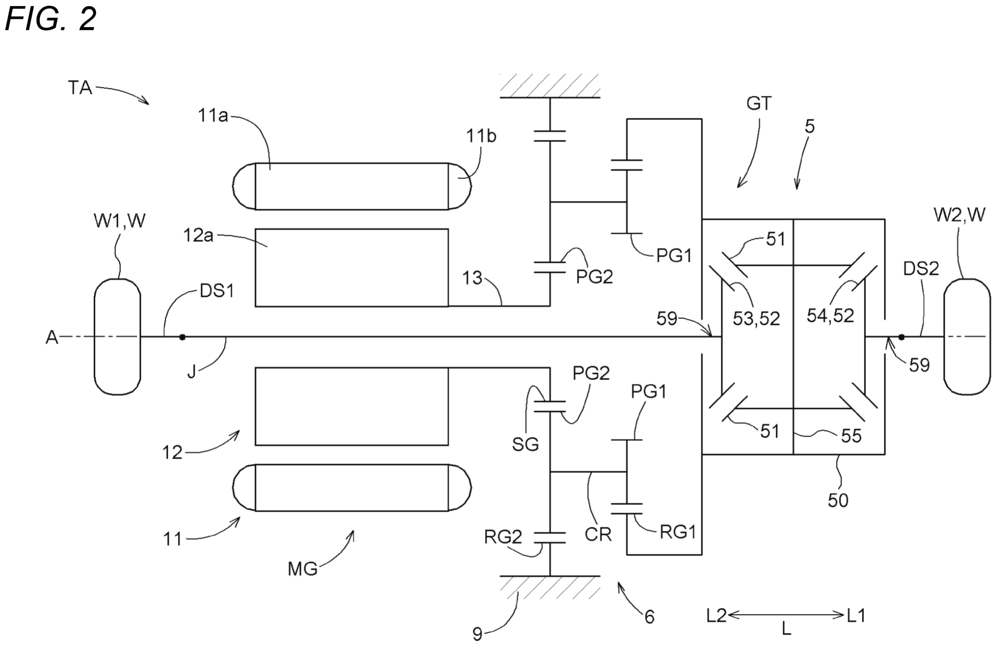

As shown in the exploded perspective view of FIG. 1 and the skeleton diagram of FIG. 2, the vehicle drive device 100 includes a rotary electric machine MG including a rotor 12, output members drivingly coupled to the wheels W, and a power transmission mechanism GT that transmits drive power between the rotary electric machine MG and the output members. As will be described later, a direction along a rotation axis A of the rotor 12 is defined as an axial direction L, and the power transmission mechanism GT is arranged on an axial first side L1, which is one side in the axial direction L, with respect to the rotor 12. Although details will be described later, the rotary electric machine MG is a drive power source for the vehicle, and the power transmission mechanism GT includes a speed reducer 6 and a differential gear mechanism 5. Specifically, the vehicle drive device 100 of the present embodiment includes the rotary electric machine MG including the rotor 12, the pair of output members each of which is drivingly coupled to a corresponding one of the wheels W, the speed reducer 6 that reduces the speed of the rotation of a rotor shaft 13, the differential gear mechanism 5 that distributes drive power from the rotary electric machine MG transmitted to a differential input element (differential case 50) through the speed reducer 6, to the pair of output members, and a case 9 that forms a housing chamber (a second housing chamber E2 to be described later) that houses the rotary electric machine MG, the speed reducer 6, and the differential gear mechanism 5.

The rotary electric machine MG and the power transmission mechanism GT correspond to the "drive unit TA" in the vehicle drive device 100. In addition, at least some of the output members may be included in the drive unit TA. The case 9 houses at least the drive unit TA including the rotary electric machine MG and the power transmission mechanism GT, and supports an inverter module INV, a power supply module PWR, and a refrigerant circuit module 2 to be described later. Note that the term "support" is not limited to an instance of using the outside of the case 9, and includes a manner of being supported by an inner face of the case 9. That is, at least one or more of the inverter module INV, the power supply module PWR, and the refrigerant circuit module 2 may be housed in the case 9.

The pair of wheels W includes a first wheel W1 and a second wheel W2, and the first wheel W1 is drivingly coupled to a first drive shaft DS1 and the second wheel W2 is drivingly coupled to a second drive shaft DS2. In the present embodiment, a pair of side gears 52 that are output gears of the differential gear mechanism 5 include a first side gear 53 and a second side gear 54. The first side gear 53 is drivingly coupled to the first drive shaft DS1 through a coupling shaft J, and the second side gear 54 is drivingly coupled to the second drive shaft DS2. For example, the first side gear 53 and the coupling shaft J are coupled through spline coupling, and the second side gear 54 and the second drive shaft DS2 are also coupled through spline coupling. These coupling portions are spline engagement portions 59. The output members are, for example, these spline engagement portions 59. In addition, the output members may be the first side gear 53, the second side gear 54, the first drive shaft DS1, the second drive shaft DS2, or the coupling shaft J.

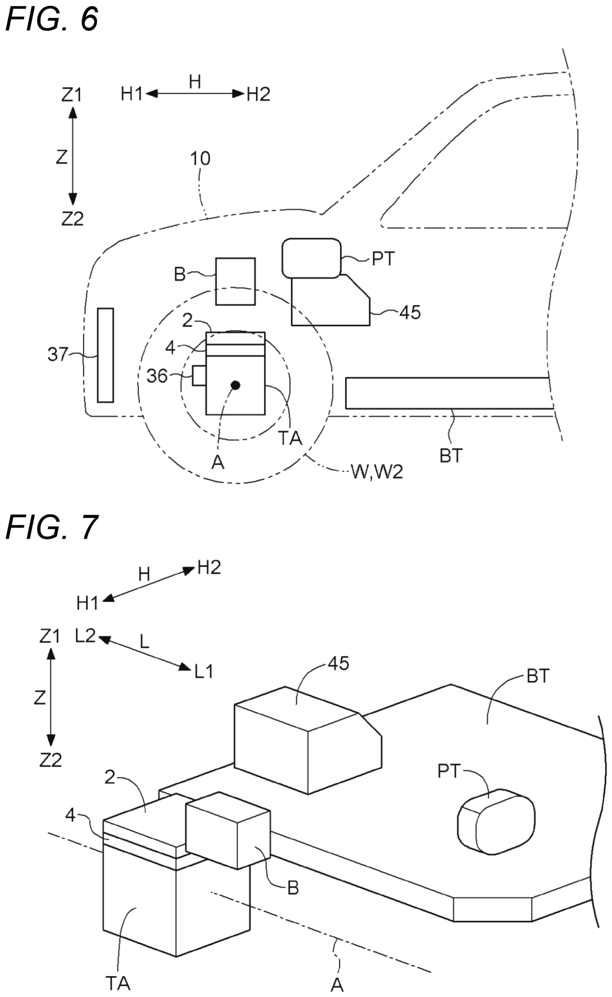

In the following description, the direction along the rotation axis A of the rotor 12 is defined as the "axial direction L", as described above. Moreover, one side in the axial direction L is defined as an "axial first side L1", and the other side in the axial direction L is defined as an "axial second side L2". In the present embodiment, the rotary electric machine MG, the speed reducer 6, and the differential gear mechanism 5 are arranged coaxially with each other in this described order from the axial second side L2 toward the axial first side L1. The vehicle drive device 100 of the present embodiment has a uniaxial configuration, and an axis (rotation axis A) on which the rotary electric machine MG, the speed reducer 6, and the differential gear mechanism 5 are arranged is the rotation axis A in the vehicle drive device 100, and is also the rotation axis of the rotary electric machine MG, the speed reducer 6, and the differential gear mechanism 5. In addition, a direction orthogonal to the rotation axis A of the rotor 12 is defined as a "radial direction". Moreover, in the radial direction, a side toward the rotation axis A of the rotor 12 is defined as a "radially inner side", and a side opposite thereto is defined as a "radially outer side". In addition, in an onboard state where the vehicle drive device 100 is mounted on the vehicle, a direction along a vertical direction is defined as an "upper-lower direction Z", and an upper side is defined as an "upper side Z1 in the upper-lower direction Z", and a lower side is defined as a "lower side Z2 in the upper-lower direction Z". When the vehicle drive device 100 is horizontally mounted on the vehicle, one direction in the radial direction coincides with the upper-lower direction Z. In addition, a direction orthogonal to the axial direction L and the upper-lower direction Z is defined as a "vehicle front-rear direction H", and one side in the vehicle front-rear direction H is defined as a "front-rear-direction first side H1", and the other side in the vehicle front-rear direction H is defined as a "front-rear-direction second side H2". As shown in FIGS. 6 to 16, in the present embodiment, the front-rear-direction first side H1 is a front side of a vehicle 10, and the front-rear-direction second side H2 is a rear side of the vehicle 10. In addition, the axial direction L corresponds to the "width direction" of the vehicle 10.

Further, regarding the arrangement position of another onboard device with respect to the "drive unit TA", when the description "'at least any one side' with respect to the drive unit TA" is made, this description includes a configuration in which the onboard device is arranged over a "plurality of sides". For example, when the drive unit TA has a rectangular parallelepiped shape, the configuration includes a configuration in which an onboard device arranged to face two faces of the rectangular parallelepiped drive unit TA is formed in an L-shape.

Further, a "side contiguous to a specific side of a specific device" means that, for example, when the "specific device" has a rectangular parallelepiped shape, a side facing a specific face, which is one face of the rectangular parallelepiped, is the "specific side", and a side on which this "specific face" and an "edge" face "another face" common thereto is the "side contiguous to the specific side". That is, when the "specific device" has a rectangular parallelepiped shape, the "specific face" facing the "specific side of the specific device" is contiguous to the "face" facing the "side contiguous to the specific side of the specific device" through the specific edge.

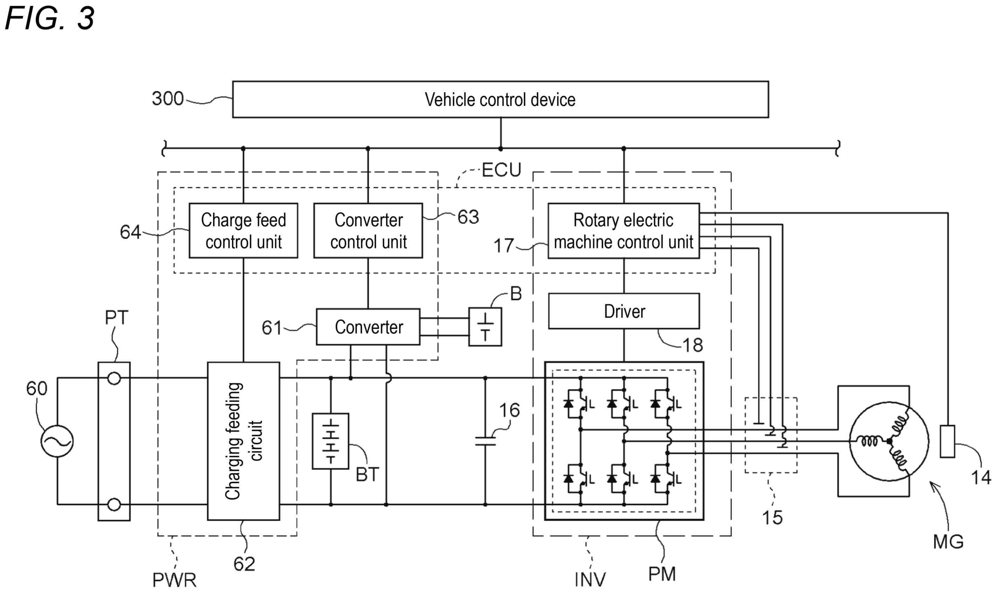

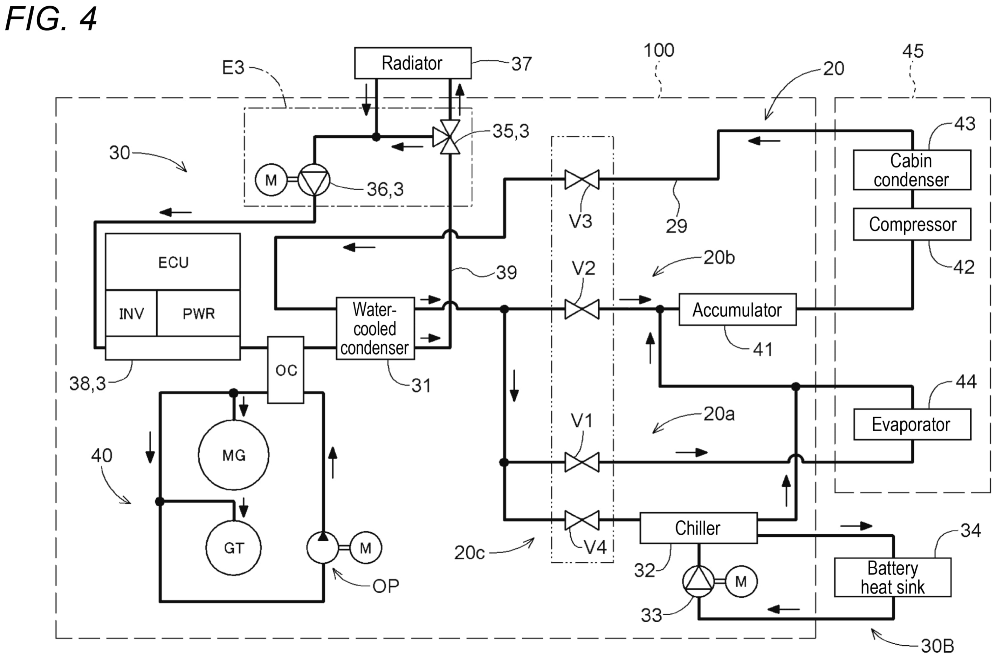

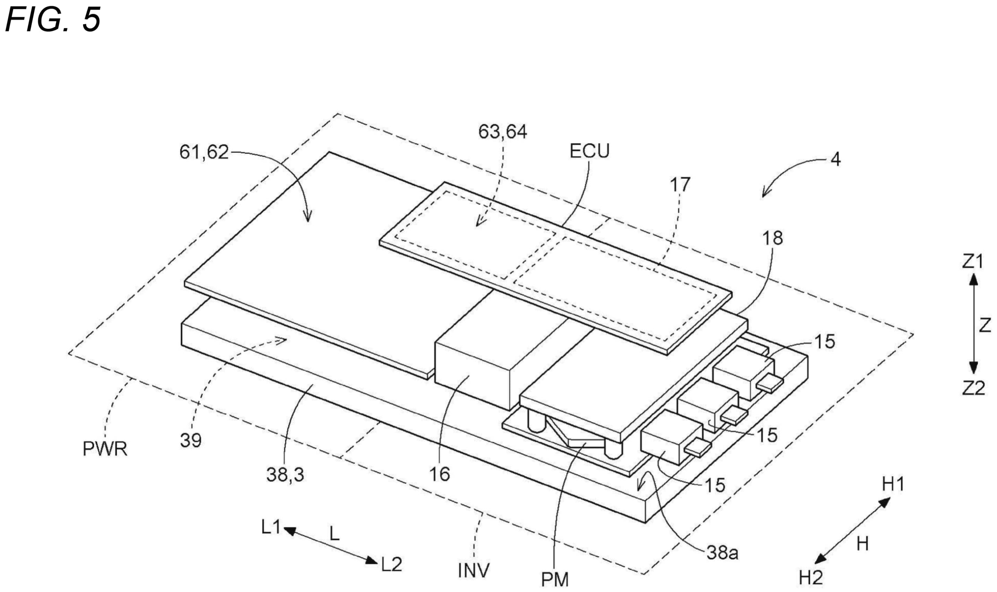

As shown in FIG. 1, the vehicle drive device 100 further includes the inverter module INV, the power supply module PWR, and the refrigerant circuit module 2. The inverter module INV is a circuit module through which drive control on the rotary electric machine MG is performed. As shown in FIG. 3, the power supply module PWR includes at least one of a converter 61 (voltage conversion circuit), electrically connected to an onboard battery BT, that converts a voltage of the onboard battery BT, a charging circuit, electrically connected to the onboard battery BT, for charging the onboard battery BT from an external power supply 60, and a feeding circuit, electrically connected to the onboard battery BT, for feeding electric power from the onboard battery BT to the outside. Note that the present embodiment exemplifies a configuration including a charging and feeding circuit 62 having bidirectional functions of charging the onboard battery BT and feeding electric power from the onboard battery BT. That is, the charging and feeding circuit 62 has functions of the charging circuit and the feeding circuit. In addition, in the present embodiment, as shown in FIG. 5, a high-voltage circuit unit 4 including the inverter module INV and the power supply module PWR is formed. The refrigerant circuit module 2 forms at least a part of a refrigerant circuit 20 (see FIG. 4) through which a refrigerant for an air conditioner is allowed to circulate.

Further, in the present embodiment, the case 9 has a first housing chamber E1 that houses the inverter module INV and the power supply module PWR (that is, the high-voltage circuit unit 4), and the second housing chamber E2 that houses the rotary electric machine MG and the power transmission mechanism GT (that is, the drive unit TA).

As shown in FIG. 1, the case 9 includes a case body 90 that is a core housing member for the first housing chamber E1 and the second housing chamber E2, and three cover members (a first cover 93, a second cover 94, and a third cover 95). The case body 90 includes a first case portion 91 and a second case portion 92. The first case portion 91 is a portion in which the first housing chamber E1, which houses the inverter module INV and the power supply module PWR, is formed. The second case portion 92 is a portion in which the second housing chamber E2, which houses the rotary electric machine MG and the power transmission mechanism GT, is formed. From the viewpoint of the function of the "drive unit TA" that drives the wheels W, the power supply module PWR need not be necessarily mounted on the vehicle drive device 100. In this case, the first case portion 91 can also be referred to as a case that houses the inverter module INV.

Note that the present embodiment exemplifies a form in which the first case portion 91 and the second case portion 92 are integrally formed of the same member, but the structure of the case 9 is not limited thereto. The case 9 may have a form in which the first case portion 91 and the second case portion 92 are formed of different members and are integrated by a fastening member such as a bolt, welding, or the like.

The first case portion 91 is formed in a rectangular box shape in which the upper side Z1 in the upper-lower direction Z is opened in the onboard state. The first case portion 91 includes a peripheral wall portion 96 surrounding a first opening 9a and disposed to extend along the upper-lower direction Z in the onboard state. The first opening 9a is closed by the first cover 93. The first opening 9a is an opening of the case 9 that houses the inverter module INV, and the first cover 93 is a cover that closes this opening. In addition, in the present embodiment, the first housing chamber E1 and the second housing chamber E2 are arranged to be aligned in the upper-lower direction Z.

The second case portion 92 is formed in a tubular shape with both sides in the axial direction L opened, and includes a tubular peripheral wall portion 97 having a cylindrical shape. The tubular peripheral wall portion 97 surrounds the power transmission mechanism GT from the radially outer side, and corresponds to a portion surrounding the second housing chamber E2 of the case 9. An opening formed on the axial second side L2 is a second opening 9b, and an opening formed on the axial first side L1 is a third opening 9c. The second opening 9b is closed by the second cover 94, and the third opening 9c is closed by the third cover 95. In the second cover 94 and the third cover 95, respective through holes through each of which a corresponding one of the drive shafts (the first drive shaft DS1 and the second drive shaft DS2) is passed are formed.

The rotary electric machine MG functions as a drive power source for the pair of wheels W. As shown in FIG. 3, the rotary electric machine MG is electrically connected, through an inverter circuit PM, to the onboard battery BT that is a DC power supply including an electric storage device such as a secondary battery or a capacitor. The rotary electric machine MG has a function as a motor (electric motor) that generates motive power by receiving supply of electric power from the onboard battery BT, and a function as a generator (electric power generator) that generates electric power by receiving supply of motive power from the wheels W side. The rotary electric machine MG generates drive power through power running with electric power stored in the onboard battery BT, and generates electric power with drive power transmitted from the pair of wheels W side to cause the onboard battery BT to be charged. The onboard battery BT is a high-voltage DC power supply whose rated voltage is about 48 volts to 400 volts.

Since the onboard battery BT supplies electric power to the rotary electric machine MG serving as a drive power source for the wheels W, the onboard battery BT has a large power capacity and a large size. Therefore, in order to allocate a space such as a vehicle interior (cabin), the onboard battery BT is arranged under a cabin floor of the vehicle 10. Note that the onboard battery BT may be arranged across a region not overlapping the vehicle interior as viewed in the upper-lower direction, for example, a region overlapping a hood as viewed in the upper-lower direction. Also in this case, the onboard battery BT is arranged on the lower side Z2 with respect to a cabin air conditioning unit 45 to be described later.

Note that in the present embodiment, the onboard battery BT is configured to be charged with the electric power generated by the rotary electric machine MG, and additionally, is also configured to be chargeable with electric power supplied from the external power supply 60 such as an AC commercial power supply whose rated voltage is about 100 volts to 240 volts. Therefore, the onboard battery BT is configured to be connectable to the external power supply 60 through the charging and feeding circuit 62. FIG. 3 exemplarily shows a configuration in which the external power supply 60 and the charging and feeding circuit 62 are connected in a wired manner through an external connection port PT including, for example, a connector. However, the configuration is not limited to such a configuration, and for example, a configuration may be adopted in which the external connection port PT receives electric power from the external power supply 60 in a non-contact manner by electromagnetic induction or the like, and in which the electric power is supplied to the onboard battery BT through the charging and feeding circuit 62. Note that in order to control the charging and feeding circuit 62, a charging and feeding control part 64 is provided.

In recent years, it has been proposed to use the onboard battery BT of an electric vehicle or a hybrid vehicle as an emergency power supply at the time of disaster or the like. The charging and feeding circuit 62 is configured to have the function of the feeding circuit in addition to the function of the charging circuit such that the onboard battery BT can be used as such an emergency power supply. Of course, in a case where such use of the onboard battery BT is not considered, the charging and feeding circuit 62 may be configured to have only the function of the charging circuit.

Further, in the present embodiment, the onboard battery BT also supplies electric power to a low-voltage DC power supply B whose rated voltage is about 12 volts to 24 volts. The low-voltage DC power supply B serves as an electric power source for auxiliary machines such as a headlight, a power window, a power steering, an air conditioner, and an electric oil pump of the vehicle 10, and an electric power source for various control devices in the vehicle 10. Conventionally, in a typical vehicle, the low-voltage DC power supply B has been charged with electric power generated by an alternator linked with a drive power source (for example, an internal combustion engine) for the vehicle. However, in the present embodiment, the low-voltage DC power supply B is configured to be charged with electric power from the onboard battery BT (high-voltage DC power supply) having a higher voltage and a larger electric storage amount than those of the low-voltage DC power supply B. With this configuration, it is not necessary to mount the alternator, and it is possible to reduce the power loss of the drive power source (the rotary electric machine MG in the case of the present embodiment) for the vehicle, caused along with the driving of the alternator.

In order to charge the low-voltage DC power supply B with the electric power from the onboard battery BT as described above, the converter 61 (voltage conversion circuit), which converts a voltage of the onboard battery BT, is provided. As described above, since the rated voltage of the onboard battery BT is higher than the rated voltage of the low-voltage DC power supply, the converter 61 is formed of, for example, a step-down-type DC/DC converter. Types of the DC/DC converter include a non-isolated type such as a chopper type or a charge pump type, and an isolated type using a transformer. In a case where it is desirable to electrically isolate the circuit to which electric power is supplied from the onboard battery BT, from the circuit to which electric power is supplied from the low-voltage DC power supply B, the converter 61 is preferably an isolated type. The isolated DC/DC converter includes a switching element, and the converter 61 is controlled by a converter control part 63.

Note that there are some vehicles each including an alternating-current power supply socket (AC power supply socket) for supplying electric power to a general household electric appliance or the like. Such an AC power supply socket is configured to be able to output an alternating current with a rated voltage of 100 volts to 200 volts. AC power supplied from the AC power supply socket is generated from the onboard battery BT using an inverter (not shown). Such an inverter also corresponds to a voltage conversion circuit, and in a case where the inverter is included, the inverter and an inverter control part that controls the inverter can also be included in the power supply module PWR.

As described above, the power supply module PWR is electrically connected to the onboard battery BT, and includes at least one of the converter 61 (voltage conversion circuit) that converts the voltage of the onboard battery BT, the charging circuit for charging the onboard battery BT from the external power supply 60, and the feeding circuit for feeding electric power from the onboard battery BT to the outside. In the present embodiment, the charging and feeding control part 64 and the converter control part 63 described above are also included in the power supply module PWR.

As shown in FIG. 2, the rotary electric machine MG includes a stator 11 secured to the case 9, and the rotor 12 coupled to the rotor shaft 13 to rotate integrally with the rotor shaft 13. The rotary electric machine MG is a rotary electric machine of an inner rotor type, and the rotor 12 is arranged on the radially inner side with respect to the stator 11. The rotary electric machine MG is a rotary electric machine of a rotating field type, and the stator 11 includes a stator core 11a and stator coils 11b wound on the stator core 11a. In addition, the rotor 12 includes a rotor core 12a and a permanent magnet (not shown) secured to the rotor core 12a. The rotor shaft 13 is formed in a tubular shape coaxial with the rotor core 12a, and a sun gear SG of a planetary gear mechanism forming the speed reducer 6 is disposed on an outer peripheral side, on the axial first side L1, of the rotor shaft 13 to rotate integrally with the rotor shaft 13. As described later, the sun gear SG is an input element of the speed reducer 6.

As shown in FIG. 3, the rotary electric machine MG is subjected to drive control by a rotary electric machine control part 17 on the basis of target torque for the rotary electric machine MG set in accordance with a command from a vehicle control device 300, which is a control device at a higher level. The rotary electric machine control part 17 performs switching control on the inverter circuit PM including a plurality of switching elements, and causes the inverter circuit PM to convert electric power between direct current and alternating current of a plurality of phases (three phases in the present embodiment). The operating voltage of the rotary electric machine control part 17 is about 3.3 volts to 5 volts, the input/output voltage of the inverter circuit PM is about 48 volts to 400 volts, and the voltage of a switching control signal for the switching element forming the inverter circuit PM is about 15 volts to 24 volts. Therefore, in between the rotary electric machine control part 17 and the inverter circuit PM, a driver 18 is provided that amplifies the voltage of the switching control signal output from the rotary electric machine control part 17 to cause drive power to increase, and that then supplies the switching control signal to the inverter circuit PM.

The inverter circuit PM includes the plurality of switching elements. The inverter circuit PM includes a plurality of sets (here, three sets) of arms each of which is for one phase of alternating current and is formed of a series circuit of an upper-stage-side switching element on the direct-current positive electrode side and a lower-stage-side switching element on the direct-current negative electrode side. Each of the switching elements is provided with a freewheeling diode in which a direction from the negative electrode to the positive electrode (a direction from the lower stage side to the upper stage side) is set as a forward direction. As the switching element, it is preferable to use a power semiconductor element such as an insulated gate bipolar transistor (IGBT), a power metal oxide semiconductor field effect transistor (MOSFET), a silicon carbide-metal oxide semiconductor FET (SiC-MOSFET), a SiC-static induction transistor (SiC-SIT), or a gallium nitride-MOSFET (GaN-MOSFET). In the present embodiment, the inverter circuit PM is constructed as a power module in which the switching elements are integrated together with the freewheeling diodes.

When the rotary electric machine MG is driven, a large current flows through the switching elements forming the inverter circuit PM, and the switching elements generate heat. Thus, an amount of heat generated from the inverter circuit PM including the plurality of switching elements is large. Therefore, in the present embodiment, as shown in FIG. 5, a cooling unit 38 that cools the switching elements is provided. In the cooling unit 38, a cooling water passage 39 through which cooling water flows is formed. Note that the cooling is not limited to a manner of direct heat exchange between a cooling target portion and the cooling water, and also includes a manner of heat exchange between the cooling target portion and the cooling water through a heat transfer medium such as oil or a heat sink.

The inverter module INV includes at least the switching elements forming the inverter circuit PM, and the cooling unit and 38 that cool the switching elements. In the present embodiment, as shown in FIG. 3, the inverter module INV further includes the rotary electric machine control part 17 and the driver 18. That is, in the present embodiment, the inverter module INV includes the rotary electric machine control part 17, the driver 18, the inverter circuit PM, and the cooling unit 38. Of course, the inverter module INV may have a configuration including the switching elements forming the inverter circuit PM, and the cooling unit and 38, without including the rotary electric machine control part 17 and the driver 18.

Note that as shown in FIG. 3, on the direct-current side of the inverter circuit PM, that is, in between the inverter circuit PM and the onboard battery BT, a DC link capacitor 16 (smoothing capacitor) is provided that smooths a voltage on the direct-current side of the inverter circuit PM. The inverter module INV may include the DC link capacitor 16.

The rotary electric machine control part 17 performs current feedback control on the basis of the rotational position of the rotor 12 (magnetic pole position of the permanent magnet), the rotational speed of the rotor 12, and currents flowing through the stator coils 11b of the three respective phases, to perform drive control on the rotary electric machine MG through the inverter circuit PM. The current flowing through the stator coil 11b is detected by a current sensor 15. As shown in FIG. 5, for example, the current sensor 15 is preferably a non-contact-type current sensor installed in the vicinity of power lines such as bus bars connecting the inverter circuit PM and the stator coils 11b of the rotary electric machine MG.

Further, the power supply module PWR includes at least the converter 61 (voltage conversion circuit) and the charging and feeding circuit 62. In the present embodiment, as shown in FIG. 5, the converter 61 and the charging and feeding circuit 62 are formed using a common board. In addition, in the present embodiment, as shown in FIG. 3, the power supply module PWR includes the converter 61, the converter control part 63, the charging and feeding circuit 62, and the charging and feeding control part 64.

Note that in the present embodiment, the rotary electric machine control part 17 included in the inverter module INV, and the converter control part 63 and the charging and feeding control part 64 included in the power supply module PWR are formed on the same one board, whereby a control board ECU is formed. The control board ECU can also be referred to as an integrated control board in which functions of the plurality of control parts are integrated.

In the present embodiment, as shown in FIG. 5, the inverter circuit PM (switching elements), the DC link capacitor 16, the converter 61, and the charging and feeding circuit 62 are attached on a cooling unit first face 38a that is an upper face of the cooling unit 38. The DC link capacitor 16, which smooths a DC voltage that generates pulsation, generates heat when a current flows in and out. In addition, the converter 61 includes a switching element, and the switching element also generates heat with a current flowing during switching operation. Further, the charging and feeding circuit 62 also generates heat because a current supplied from the external power supply 60 to charge the onboard battery BT also flows through the charging and feeding circuit 62. The cooling unit 38 includes the cooling water passage 39 through which the cooling water flows, and these heat generating members are appropriately cooled by being attached to the cooling unit first face 38a. Note that the inverter circuit PM becomes the largest in amount of heat generation and the highest in temperature.

For example, the cooling water passage 39 is formed in the cooling unit 38 such that a portion that cools the inverter circuit PM is on the downstream side, that is, the cooling water flows from the power supply module PWR side to the inverter module INV side. By circulating the cooling water from a region in which the amount of heat generation is low to a region in which the amount of heat generation is high, it is possible to appropriately cool the cooling target that generates heat in a state of suppressing the temperature rise in the cooling water. In addition, when the rotary electric machine MG is being driven, that is, when the vehicle 10 is traveling, the onboard battery BT is hardly charged from the external power supply 60. There may be a mode in which power is fed in a non-contact manner from a power feeding device installed on a road while the vehicle is traveling on the road, but this mode is not generally put into practical use. Therefore, when the rotary electric machine MG is being driven, the charging and feeding circuit 62 is often stopped. In addition, a current flowing when the low-voltage DC power supply B is charged is smaller than the current flowing through the charging and feeding circuit 62 when the onboard battery BT is charged, and is also smaller in amount of heat generated therefrom. Thus, even if the low-voltage DC power supply B is charged while the rotary electric machine MG is being driven, an amount of heat generated from the converter 61 is smaller than that from the charging and feeding circuit 62. Therefore, even if the cooling water is caused to flow in such a route, the inverter circuit PM can be appropriately cooled.

The driver 18 is arranged on the upper side Z1, in the upper-lower direction Z, of the inverter circuit PM. Moreover, the control board ECU is arranged across the rotary electric machine control part 17, the converter control part 63, and the charging and feeding control part 64. Generally, the control board ECU is arranged such that the inverter circuit PM, the driver 18, and the rotary electric machine control part 17 overlap one another, the converter 61 and the converter control part 63 overlap each other, and the charging and feeding circuit 62 and the charging and feeding control part 64 overlap each other, as viewed in the upper-lower direction. In the present embodiment, as shown in FIGS. 1 and 5, the power supply module PWR is arranged on the axial first side L1 to be adjacent to the inverter module INV. The control board ECU is arranged across the rotary electric machine control part 17, the converter control part 63, and the charging and feeding control part 64 along the axial direction L. Moreover, as shown in FIG. 1, the control board ECU is arranged between the inverter circuit PM (switching elements) and the refrigerant circuit module 2 in the upper-lower direction Z.

As shown in FIG. 2, the speed reducer 6 is formed as a planetary gear mechanism including an input element that rotates integrally with the rotor shaft 13, a stationary element secured to the case 9, an output element that rotates integrally with the differential input element (differential case 50), and planetary gears. This planetary gear mechanism is a composite-type planetary gear mechanism including the one sun gear SG, two ring gears (first ring gear RG1 and second ring gear RG2), two planetary gears (first planetary gear PG1 and second planetary gear PG2) that rotate integrally with each other, and a carrier CR that rotatably supports the two planetary gears. In the present embodiment, the first planetary gear PG1 is formed to have a diameter smaller than the diameter of the second planetary gear PG2.

The sun gear SG rotates integrally with the rotor 12 and the rotor shaft 13. The second ring gear RG2 is secured to the case 9. The first ring gear RG1 is arranged on the axial first side L1 with respect to the second ring gear RG2, and is coupled to the differential case 50 to rotate integrally with the differential case 50. The second planetary gear PG2 meshes with the sun gear SG and the second ring gear RG2, and the first planetary gear PG1 rotates integrally with the second planetary gear PG2 and meshes with the first ring gear RG1. In the present embodiment, the sun gear SG is the input element, the second ring gear RG2 is the stationary element, and the first ring gear RG1 is the output element. The carrier CR is not coupled to any rotary element and stationary element.

The differential gear mechanism 5 is a differential gear mechanism of a bevel gear type, and includes pinion gears 51 and the side gears 52, which are bevel gears. The pinion gears 51 are supported by the differential case 50, and are rotatably supported by pinion shafts 55 arranged to extend along the radial direction. The pinion shafts 55 are configured to rotate integrally with the differential case 50, and the pinion gears 51 are configured to be able to rotate (spin) about the pinion shafts 55 and to be able to rotate (revolve) about the rotation axis A of the differential case 50. The plurality of pinion shafts 55 are arranged in a radial manner (for example, in a cross shape) about the rotation axis A of the differential case 50, and each of the pinion gears 51 is attached to a corresponding one of the plurality of pinion shafts 55. The differential case 50 houses the pinion gears 51, the side gears 52, and the pinion shafts 55 therein.

The side gears 52 include the first side gear 53 and the second side gear 54, and are arranged, in the form of the pair of side gears, apart from each other in the axial direction L. The first side gear 53 and the second side gear 54 mesh with each of the plurality of pinion gears 51, and are arranged to rotate about the rotation axis A of the differential case 50. As shown in FIG. 2, the first side gear 53 is coupled to the coupling shaft J, which extends along the axial direction L while passing through the radially inner side with respect to the speed reducer 6 and the hollow tubular rotor shaft 13. The coupling shaft J is coupled to the first drive shaft DS1 to rotate integrally with the first drive shaft DS1 drivingly coupled to the first wheel W1, which is the wheel W on the axial second side L2. Therefore, the first side gear 53 is drivingly coupled to the first wheel W1 through the coupling shaft J. In addition, the second side gear 54 is coupled to the second drive shaft DS2 to rotate integrally with the second drive shaft DS2 drivingly coupled to the second wheel W2, which is the wheel W on the axial first side L1.

It can be said that all of the first drive shaft DS1, the second drive shaft DS2, the coupling shaft J, the first side gear 53, and the second side gear 54, each of which is drivingly coupled to a corresponding one of the wheels W and rotates integrally with the corresponding one of the wheels W, are rotary members corresponding to the output members. It can also be said that the first side gear 53 and the second side gear 54 form the differential gear mechanism 5 and are also the output members. Note that the first side gear 53 and the second side gear 54 include respective gear portions meshing with the pinion gears 51 and the respective spline engagement portions 59 each coupled to the corresponding one of the coupling shaft J and the second drive shaft DS2. When these portions are considered in a functionally separated manner, the gear portions correspond to rotary members included in the differential gear mechanism 5, and the spline engagement portions 59 correspond to the output members.

In such a vehicle drive device 100, the rotary electric machine MG and the power transmission mechanism GT are often lubricated (and also cooled) by oil, and the vehicle drive device 100 of the present embodiment is also lubricated by oil. For example, oil stored in an oil reservoir formed on the lower side Z2 in the case 9 is supplied to a lubrication target portion such as bearings or a cooling target portion such as the stator coil 11b of the rotary electric machine MG by an oil pump OP (see FIG. 4) or by being scooped up by a gear of the power transmission mechanism GT. An oil flow passage 40 shown in FIG. 4 exemplifies a configuration in which oil discharged from the oil pump OP is supplied to the rotary electric machine MG (bearings and the like for the stator coil 11b and the rotor shaft 13) and the power transmission mechanism GT (bearings and the like for the gears). Of course, since the temperature of the oil used for cooling rises, an oil cooler OC for cooling the oil is also connected to the oil flow passage 40. The oil cooler OC cools the oil through heat exchange with the cooling water.

As described above, the inverter module INV includes the cooling unit 38 that cools the switching elements forming the inverter circuit PM. Therefore, the vehicle drive device 100 includes a cooling water circuit module 3 forming a cooling water circuit 30 through which the cooling water is allowed to circulate in a path passing through the cooling unit 38 and a radiator 37 (onboard radiator). As shown in FIG. 4, the radiator 37, a first water pump 36, the cooling unit 38, and a three-way valve 35 are connected to the cooling water circuit 30. The cooling water circuit module 3 includes at least a water passage formed in the case 9 and the cooling unit 38. In addition, the cooling water circuit module 3 may further include the three-way valve 35 and the first water pump 36. The cooling water cooled (subjected to heat dissipation) by the radiator 37 is sent to the cooling water circuit 30 by the first water pump 36, and removes heat from the inverter module INV and the power supply module PWR in the cooling unit 38. Then, the cooling water returns to the radiator 37 through the three-way valve 35, and the heat of the cooling water is discharged.

As shown in FIG. 4, the oil cooler OC described above is also connected to the cooling water circuit 30. The oil cooler OC cools the oil flowing through the oil flow passage 40 through heat exchange with the cooling water flowing through the cooling water circuit 30. In addition, a water-cooled condenser 31 (heat exchanger for refrigerant) is also connected to the cooling water circuit 30. In the water-cooled condenser 31, heat is exchanged between the refrigerant for the onboard air conditioner and the cooling water, and the refrigerant whose temperature has increased is cooled.

The cooling water whose temperature has risen through the cooling unit 38, the oil cooler OC, and the water-cooled condenser 31 returns to the radiator 37 through the three-way valve 35, and the heat of the cooling water is discharged. However, it is not necessary to perform the heat dissipation through the radiator 37, in a case where it is not necessary to discharge heat due to cold weather or the like, in a case where it is rather desired to increase the temperature of the oil by using the cooling water, in a case where rapid heating is performed with the onboard air conditioner, or in other cases. In such a case, the three-way valve 35 switches the flow passage of the cooling water to cause the cooling water to circulate without passing through the radiator 37.

As described above, the water-cooled condenser 31 is connected to the refrigerant circuit 20 through which the refrigerant for the onboard air conditioner flows. The refrigerant circuit 20 is formed with a path (first flow passage 20a) from the water-cooled condenser 31 via a first valve V1 and further through an evaporator 44 to an accumulator 41, and a path (second flow passage 20b) returning to the water-cooled condenser 31, through a route from the water-cooled condenser 31 via a second valve V2 to the accumulator 41, and further through a compressor 42 and a cabin condenser 43 and then via a third valve V3.

The evaporator 44 is a functional component serving as a core for cooling, and removes heat from the surroundings by vaporizing the refrigerant to release cool air into the vehicle interior. The accumulator 41 separates liquid from a refrigerant in which gas and the liquid are mixed, and supplies only the gas (refrigerant gas) to the compressor 42. The compressor 42 compresses the refrigerant gas having a relatively low temperature and a relatively low pressure into a refrigerant gas having a high temperature and a high pressure. The cabin condenser 43 is a heat source for heating using a heat pump system, and releases heat through condensation through the compressor 42, into the vehicle interior. The refrigerant having flowed out of the cabin condenser 43 flows to the water-cooled condenser 31 through the third valve V3, which is an expansion valve.

The compressor 42, the cabin condenser 43, and the evaporator 44 described above are included in the cabin air conditioning unit 45 that adjusts temperature and air volume at the time of cooling or heating and selects an air outlet in the onboard air conditioner.

Further, in the present embodiment, a battery heat sink 34 cools the onboard battery BT also through heat exchange with the cooling water, and the cooling water whose temperature has risen is cooled through heat exchange with the refrigerant in a chiller 32. Therefore, a third flow passage 20c is formed as a path through which the refrigerant reaches the accumulator 41 from the water-cooled condenser 31 through a fourth valve V4 and the chiller 32.

To the chiller 32, a second cooling water circuit 30B is connected, through which the cooling water having flowed out of the chiller 32 returns to the chiller 32 through the battery heat sink 34 and a second water pump 33. The chiller 32 exchanges heat between the cooling water and the refrigerant, similarly to the water-cooled condenser 31, and cools the cooling water by removing heat from the cooling water. The cooling water whose temperature has risen due to heat exchange with the battery heat sink 34 is cooled in the chiller 32. By providing the second cooling water circuit 30B for cooling the onboard battery BT and the third flow passage 20c for cooling the cooling water flowing through the second cooling water circuit 30B, limitation on an input/output current to the onboard battery BT can be easily eased, even when a current flowing through the onboard battery BT increases and the temperature of the onboard battery BT rises, such as during rapid charging or high speed traveling.

As described above, the refrigerant circuit 20 includes the first flow passage 20a including a flow passage of refrigerant from the water-cooled condenser 31 (heat exchanger for refrigerant) to the evaporator 44, the second flow passage 20b including a flow passage of refrigerant from the compressor 42 to the water-cooled condenser 31, and the third flow passage 20c including a flow passage of refrigerant involving the chiller 32. The refrigerant flowing through the first flow passage 20a is lower in temperature than the second flow passage 20b and the third flow passage 20c. In addition, the refrigerant flowing through the third flow passage 20c is lower in temperature than the second flow passage 20b.

A part of the flow passage forming the refrigerant circuit 20 can also be formed using the first cover 93 of the case 9. For example, as shown in FIG. 1, control valves V (the first valve V1, the second valve V2, the third valve V3, and the fourth valve V4) that control flow rates or the flow passages of the refrigerant in the refrigerant circuit 20 are attached to a first cover first face 93a of the first cover 93. In the present embodiment, the refrigerant circuit module 2 is configured by the refrigerant circuit 20 formed in the first cover 93 and the control valves V. Note that, here, a portion of the first cover 93 formed with the refrigerant circuit 20 is referred to as a refrigerant manifold 21.

The water-cooled condenser 31, the chiller 32, and the accumulator 41 as functional components forming the flow passages of refrigerant in the refrigerant circuit 20 are attached to the refrigerant circuit module 2. The refrigerant circuit module 2 and these functional components together form a refrigerant module 1. Note that in a case where the onboard battery BT is configured not to be cooled using the cooling water, that is, in a case where the third flow passage 20c is not formed, the chiller 32 need not be provided. Therefore, the refrigerant circuit module 2, the water-cooled condenser 31, and the accumulator 41 may form the refrigerant module 1. Note that the refrigerant circuit module 2 is simply required to form at least a part of the refrigerant circuit through which the refrigerant for the onboard air conditioner is allowed to circulate, and in addition to the refrigerant manifold 21 and also the control valves V, the water-cooled condenser 31, the chiller 32, and the accumulator 41 may also be included in the refrigerant circuit module 2.

Note that a refrigerant path constituent members include the control valves V and the functional components, and the functional components include the water-cooled condenser 31, the chiller 32, and the accumulator 41. In addition, in the present embodiment, although not included in the refrigerant module 1, the compressor 42, the cabin condenser 43, the evaporator 44, and the battery heat sink 34 are also functional components. Further, the second water pump 33 is also a functional component. For example, as shown in FIG. 4, in a case where the second water pump 33 is also provided integrally with the vehicle drive device 100, the second water pump 33 can be included in the refrigerant module 1. The accumulator 41 is included in the refrigerant module 1 in a case where the accumulator 41 is attached to the first cover 93 as shown in FIG. 1. However, a configuration may be adopted in which the accumulator 41 is disposed separately from the vehicle drive device 100 and is not included in the refrigerant module 1.

With such a configuration, the refrigerant for the onboard air conditioner flowing through the refrigerant circuit 20 can be cooled by the cooling water. Since the cooling water circulates in the path passing through the radiator 37, the heat of the refrigerant for the onboard air conditioner can be discharged to the outside of the vehicle through the radiator 37. In addition, the water-cooled condenser 31 (heat exchanger) is integrally secured to the case 9 through the refrigerant path constituent member. Therefore, it is possible to reduce the number of pipes or the like connecting the functional components forming the refrigerant circuit 20.

The cooling structure of the vehicle drive device 100 is preferably constructed also in consideration of a relationship between the vehicle drive device 100 and the onboard air conditioner. In addition, since the onboard battery BT connected to the rotary electric machine MG has a high voltage and a large power capacity, the weight per unit length of a wiring line connecting an onboard charger, including the charging and feeding circuit 62, and the onboard battery BT tends to increase. The energy efficiency of the vehicle 10 tends to be increased as the vehicle 10 is lighter. Therefore, it is preferable to make compact the entire onboard member group including the vehicle drive device 100 as a core, also in consideration of connection members connecting the onboard air conditioner or the onboard battery BT and the vehicle drive device 100.

Specific arrangement examples (first to tenth examples) of the onboard member group including the vehicle drive device 100 as a core and including the onboard air conditioner and the onboard battery BT will be described below with reference to FIGS. 6 to 16. First, a typical example (first example) among the plurality of specific examples will be described with reference to FIGS. 6 and 7.

In the vehicle drive device 100, in the onboard state thereof, the drive unit TA is arranged on the front-rear-direction first side H1 with respect to the cabin air conditioning unit 45 of the onboard air conditioner, and the onboard battery BT arranged under the floor of the cabin of the vehicle 10. Moreover, the refrigerant circuit module 2 is arranged on the upper side Z1 with respect to the drive unit TA. Note that although other examples will be described later, the refrigerant circuit module 2 is arranged on the upper side Z1 or the front-rear-direction second side H2 with respect to the drive unit TA. In addition, the high-voltage circuit unit 4 including the inverter module INV is also arranged on the upper side Z1 with respect to the drive unit TA. Although other examples will be described later similarly to the refrigerant circuit module 2, the inverter module INV is arranged on at least any one side of the upper side Z1, the lower side Z2, the front-rear-direction second side H2, the width-direction first side (axial first side L1), and the width-direction second side (axial second side L2) with respect to the drive unit TA.

That is, the inverter module INV is arranged at a position on a side other than the front-rear-direction first side H1 with respect to the drive unit TA, in the upper-lower direction Z, the vehicle front-rear direction H, and the width direction (axial direction L) indicated by a three-dimensional orthogonal coordinate system. Moreover, the high-voltage circuit unit 4 including the power supply module PWR is arranged on the upper side Z1, which is the same side as the side on which the inverter module INV is arranged, with respect to the drive unit TA. Similarly to the inverter module INV and the like, although other examples will be described later, the power supply module PWR is arranged on at least any one side of the upper side Z1, the lower side Z2, the front-rear-direction second side H2, the width-direction first side (axial first side L1), and the width-direction second side (axial second side L2) with respect to the drive unit TA, the at least any one side being the same side as the side on which the inverter module INV is arranged, or a side contiguous to the side on which the inverter module INV is arranged, with respect to the drive unit TA.

The vehicle drive device 100 thus has a configuration in which not only is the inverter module INV provided integrally with the drive unit TA, but also the power supply module PWR and the refrigerant circuit module 2 are provided integrally with the drive unit TA. Therefore, it is possible to reduce the number of wiring lines, pipes, or the like connecting a unit formed of the drive unit TA and the inverter module INV and each of the power supply module PWR and the refrigerant circuit module 2. In addition, by allowing not only the drive unit TA and the inverter module INV but also the power supply module PWR and the refrigerant circuit module 2 to be integrally supported by the case 9, it is possible to obtain the vehicle drive device 100 integrated while being provided with many functions, and it is also easy to make compact the entire onboard member group including the vehicle drive device 100 as a core.

The cabin air conditioning unit 45 of the onboard air conditioner is often typically arranged on the upper side Z1 with respect to the drive unit TA, in relation to introduction of outside air and supply of air into the vehicle interior. In particular, as in the present embodiment, in the drive unit TA of a uniaxial configuration, the drive unit TA is arranged coaxially with the wheels W, and thus the cabin air conditioning unit 45 is arranged on the upper side Z1 with respect to the drive unit TA. The refrigerant circuit module 2 is arranged on the upper side Z1 with respect to the drive unit TA, and thus it is easy to reduce a distance between the refrigerant circuit module 2 and the cabin air conditioning unit 45, and it is easy to shorten pipes connecting the refrigerant circuit module 2 and the cabin air conditioning unit 45.

Further, the inverter module INV and the power supply module PWR are arranged on a side other than the front-rear-direction first side H1 that is a side opposite to the side on which the onboard battery BT is arranged, with respect to the drive unit TA. Therefore, it is easy to reduce a distance between each of the inverter module INV and the power supply module PWR and the onboard battery BT, and it is also easy to shorten wiring lines connecting each of the inverter module INV and the power supply module PWR and the onboard battery BT.

Further, since the power supply module PWR is arranged on the same side as the side on which the inverter module INV is arranged, it is also easy to shorten wiring lines connecting the power supply module PWR and the inverter module INV. Note that, in the present embodiment, as shown in FIGS. 1 and 5, the power supply module PWR and the inverter module INV are integrally formed as the high-voltage circuit unit 4, and it is easy to further shorten the wiring lines connecting the power supply module PWR and the inverter module INV.

Further, as shown in FIG. 6, in the present embodiment, in the onboard state, the drive unit TA is arranged on the lower side Z2 with respect to the external connection port PT, provided on the vehicle 10, for electrical connection between the vehicle 10 and the outside. As shown in FIG. 7, the external connection port PT is provided at any end portion in the width direction (axial direction L) such that the external connection port PT is connectable to the external power supply 60 on a side face of the vehicle 10. Moreover, the power supply module PWR is arranged on the upper side Z1 with respect to the drive unit TA. In the configuration shown in FIGS. 6 and 7, both the power supply module PWR and the external connection port PT are arranged on the upper side Z1 with respect to the drive unit TA. That is, the power supply module PWR and the external connection port PT are arranged close to each other. Therefore, it is easy to reduce a distance between the power supply module PWR and the external connection port PT, and it is easy to shorten wiring lines connecting the power supply module PWR and the external connection port PT.

Further, as shown in FIGS. 6 and 7, the low-voltage DC power supply B is also arranged on the upper side Z1 with respect to the drive unit TA. In a case where the power supply module PWR is arranged on the upper side Z1 with respect to the drive unit TA, it is easy to reduce a distance between the converter 61 and the low-voltage DC power supply B shown in FIG. 3, and it is easy to shorten wiring lines connecting the converter 61 and the low-voltage DC power supply B.

As described above with reference to FIG. 4, the vehicle drive device 100 includes the water pump (first water pump 36) that causes the cooling water for cooling at least one of the rotary electric machine MG and the inverter module INV to circulate. FIG. 4 exemplarily shows a manner in which the cooling water caused to circulate by the first water pump 36 cools the inverter module INV through the cooling unit 38. As shown in FIG. 6, in the onboard state, the drive unit TA is arranged on the front-rear-direction second side H2 with respect to the radiator 37 that exchanges heat between the cooling water and outside air. Moreover, as shown in FIGS. 1 and 6, the first water pump 36 is arranged on the front-rear-direction first side H1 with respect to the drive unit TA, and is supported by the case 9.

When the water pump (first water pump 36) causes the cooling water to circulate, at least one of the rotary electric machine MG and the inverter module INV can be appropriately cooled. In addition, by arranging the water pump on the side of the radiator 37 with respect to the drive unit TA, it is easy to reduce a distance between the radiator 37 and the water pump, and it is easy to shorten pipes connecting the radiator 37 and the water pump.

Further, as shown in FIG. 4, the vehicle drive device 100 includes the heat exchanger (water-cooled condenser 31) that exchanges heat between the cooling water for cooling at least the inverter module INV and the refrigerant. As shown in FIGS. 1, 6, and 7, the inverter module INV is arranged on the same side as the side on which the refrigerant circuit module 2 is arranged, with respect to the drive unit TA. As shown in FIG. 1, the water-cooled condenser 31 is arranged in a region between a region in which the refrigerant circuit module 2 is arranged and a region in which the inverter module INV is arranged. Note that although other examples will be described later, the inverter module INV is simply required to be arranged on the same side as the side on which the refrigerant circuit module 2 is arranged, or a side contiguous to the side on which the refrigerant circuit module 2 is arranged, with respect to the drive unit TA.

By arranging the inverter module INV with respect to the refrigerant circuit module 2 in this manner, it is easy to reduce a distance between the inverter module INV and the refrigerant circuit module 2, and it is easy to shorten pipes forming the respective flow passages of the refrigerant circulating through the refrigerant circuit module 2 and the cooling water for cooling the inverter module INV. In addition, since the heat exchanger (water-cooled condenser 31) is arranged in the region between the region in which the refrigerant circuit module 2 is arranged and the region in which the inverter module INV is arranged, it is easy to shorten both the flow passage connecting the refrigerant circuit module 2 and the heat exchanger and the flow passage connecting the inverter module INV and the heat exchanger, and it is also easy to shorten pipes forming the flow passages.

The configuration exemplarily shown in FIGS. 1, 6, and 7 described above is referred to as the first example of the relative arrangement of the onboard member group. In the first example, the refrigerant circuit module 2 is arranged at the uppermost portion of the vehicle drive device 100 in the upper-lower direction Z such that the pipes between the refrigerant circuit module 2, in the vehicle drive device 100 in which the drive unit TA and the refrigerant circuit module 2 are formed integrally with each other, and the cabin air conditioning unit 45 can be shortened. That is, the refrigerant circuit module 2 is arranged on the most upper side Z1 with respect to the drive unit TA. By shortening the pipes for the refrigerant, it is possible to reduce an amount of heat dissipated to the atmosphere in cold weather and an amount of heat received from the atmosphere in the summer, thereby improving the efficiency of the onboard air conditioner.

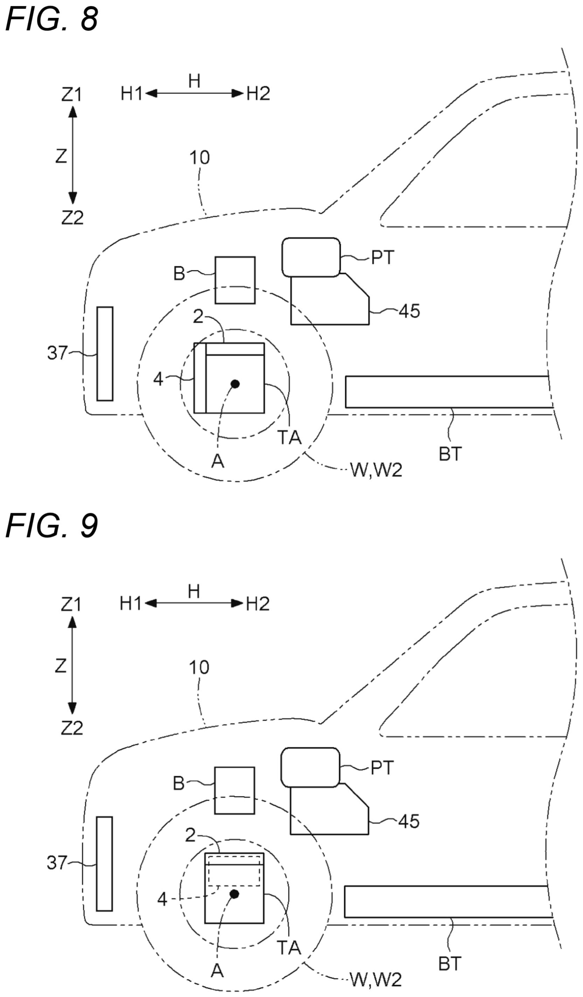

Note that also in the second to sixth examples shown in FIGS. 8 to 12, the refrigerant circuit module 2 is arranged at the uppermost portion of the vehicle drive device 100 in the upper-lower direction Z. Therefore, also in each of the second to sixth examples, it is possible to shorten the pipes between the refrigerant circuit module 2 and the cabin air conditioning unit 45. The arrangement position of the refrigerant circuit module 2 is common in the first to sixth examples, but the arrangement positions of the high-voltage circuit unit 4 including the power supply module PWR are different from one another throughout the first to sixth examples. In each example, the arrangement position of the power supply module PWR is set by a relationship with the external connection port PT, the onboard battery BT, and the low-voltage DC power supply B.

FIG. 8 shows a second example of the relative arrangement of the onboard member group. Also in the second example, in the onboard state, the drive unit TA is arranged on the front-rear-direction first side H1 with respect to the cabin air conditioning unit 45 and the onboard battery BT. Moreover, the refrigerant circuit module 2 is also arranged on the upper side Z1 with respect to the drive unit TA. However, in the second example, the high-voltage circuit unit 4 including the inverter module INV is arranged on the front-rear-direction first side H1 with respect to the drive unit TA. Moreover, the high-voltage circuit unit 4 including the power supply module PWR is arranged on the front-rear-direction first side H1, which is the same side as the side on which the inverter module INV is arranged, with respect to the drive unit TA.

Also in the second example, as shown in FIG. 8, in the onboard state, the drive unit TA is arranged on the lower side Z2 with respect to the external connection port PT. In the second example, the high-voltage circuit unit 4 including the power supply module PWR is arranged on the front-rear-direction first side H1 with respect to the drive unit TA. With reference to the drive unit TA, the power supply module PWR is arranged on a side far from the external connection port PT. However, for example, in a case where the converter 61 of the power supply module PWR is arranged on the upper side Z1, on the front-rear-direction first side H1 with respect to the drive unit TA, it is possible to reduce a distance between the power supply module PWR and the low-voltage DC power supply B.

Also in the second example, as shown in FIG. 8, in the onboard state, the drive unit TA is arranged on the front-rear-direction second side H2 with respect to the radiator 37. Since the radiator 37 is arranged in the most front portion of the vehicle 10, the drive unit TA is arranged on the front-rear-direction second side H2 with respect to the radiator 37, also in each of the third to tenth examples described below with reference to FIGS. 9 to 16. The first water pump 36 is preferably arranged on the front-rear-direction first side H1 with respect to the drive unit TA. However, in a case where the high-voltage circuit unit 4 is arranged on the front-rear-direction first side H1 of the drive unit TA as in the second example, the first water pump 36 may be arranged on the width-direction first side (axial first side L1) or the width-direction second side (axial second side L2) of the drive unit TA, and may be supported by the case 9. For example, with arrangement on the front-rear-direction first side H1 in any outer wall of the case 9 in the width direction (axial direction L), it is possible to reduce a distance to the radiator 37.

Note that illustration of the arrangement position of the first water pump 36 is omitted in each of FIGS. 8 to 16 showing the second example to the tenth example. As described above in the description of the second example, preferably, the first water pump 36 is arranged on the front-rear-direction first side H1, the width-direction first side (axial first side L1), the width-direction second side (axial second side L2), or the like of the drive unit TA, and is supported by the case 9. Hereinafter, in the description of the third to tenth examples, the description of the arrangement position of the first water pump 36 will be omitted. Note that, in the examples including the first example, the first water pump 36 may be mounted on the vehicle 10 without being supported by the case 9, that is, without being integrated with the drive unit TA (vehicle drive device 100). In addition, the arrangement relationship between the radiator 37 and the drive unit TA is also common in the first to tenth examples, and thus the description thereof for the third to tenth examples will be omitted.

As shown in FIG. 8, in the second example, the high-voltage circuit unit 4 including the inverter module INV is arranged on a side contiguous to the side on which the refrigerant circuit module 2 is arranged, with respect to the drive unit TA. Moreover, also in the second example, the water-cooled condenser 31 (heat exchanger) is preferably arranged in the region between the region in which the refrigerant circuit module 2 is arranged and the region in which the inverter module INV is arranged. Note that for the first example, the arrangement position of the water-cooled condenser 31 is shown in FIG. 1, but illustration of the arrangement position of the water-cooled condenser 31 is omitted for the second to tenth examples. In addition, of course, in the examples including the first example, it is not precluded that there is a configuration in which the water-cooled condenser 31 is not arranged in the region between the region in which the refrigerant circuit module 2 is arranged and the region in which the inverter module INV is arranged.

FIG. 9 shows a third example of the relative arrangement of the onboard member group. Also in the third example, in the onboard state, the drive unit TA is arranged on the front-rear-direction first side H1 with respect to the cabin air conditioning unit 45 and the onboard battery BT. Moreover, the refrigerant circuit module 2 is also arranged on the upper side Z1 with respect to the drive unit TA. The high-voltage circuit unit 4 including the inverter module INV is arranged on the width-direction second side (axial second side L2) with respect to the drive unit TA. Moreover, the high-voltage circuit unit 4 including the power supply module PWR is also arranged on the width-direction second side (axial second side L2), which is the same side as the side on which the inverter module INV is arranged, with respect to the drive unit TA.

Further, also in the third example, as shown in FIG. 9, in the onboard state, the drive unit TA is arranged on the lower side Z2 with respect to the external connection port PT. In the third example, the high-voltage circuit unit 4 including the power supply module PWR is arranged on the width-direction second side (axial second side L2) with respect to the drive unit TA. Even in this case, when the power supply module PWR is arranged on the upper side Z1, on the width-direction second side (axial second side L2) with respect to the drive unit TA, the power supply module PWR can be arranged close to the external connection port PT. Therefore, it is easy to reduce the distance between the power supply module PWR and the external connection port PT, and it is easy to shorten the wiring lines connecting the power supply module PWR and the external connection port PT.

Further, in a case where the high-voltage circuit unit 4 including the power supply module PWR is arranged on the upper side Z1, on the width-direction second side (axial second side L2) with respect to the drive unit TA, it is easy to reduce the distance between the converter 61 and the low-voltage DC power supply B shown in FIG. 4. Therefore, it is also easy to shorten the wiring lines connecting the converter 61 and the low-voltage DC power supply B.

As shown in FIG. 9, in the third example, the high-voltage circuit unit 4 including the inverter module INV is arranged on a side contiguous to the side on which the refrigerant circuit module 2 is arranged, with respect to the drive unit TA. Although the arrangement position of the water-cooled condenser 31 (heat exchanger) is omitted, also in the third example, the water-cooled condenser 31 is preferably arranged in the region between the region in which the refrigerant circuit module 2 is arranged and the region in which the inverter module INV is arranged.

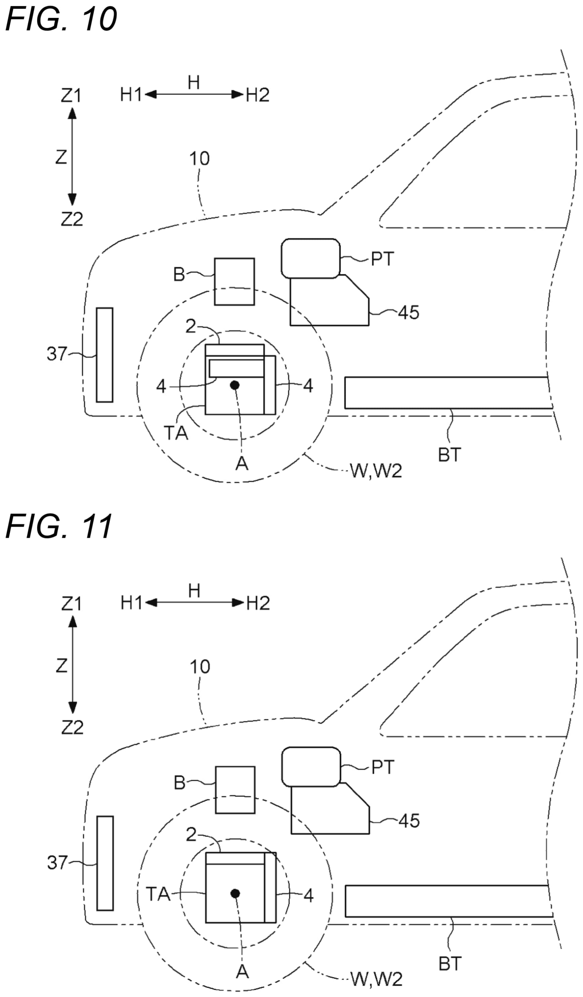

FIG. 10 shows a fourth example of the relative arrangement of the onboard member group. Also in the fourth example, in the onboard state, the drive unit TA is arranged on the front-rear-direction first side H1 with respect to the cabin air conditioning unit 45 and the onboard battery BT. Moreover, the refrigerant circuit module 2 is also arranged on the upper side Z1 with respect to the drive unit TA. The high-voltage circuit unit 4 including the inverter module INV and the power supply module PWR is arranged on the front-rear-direction second side H2 and the width-direction first side (axial first side L1) with respect to the drive unit TA. In addition, the inverter module INV and the power supply module PWR may be separately arranged on respective different sides with respect to the drive unit TA, or a circuit group forming the inverter module INV and a circuit group forming the power supply module PWR may be separately arranged on respective different sides with respect to the drive unit TA. The power supply module PWR included in the high-voltage circuit unit 4 is arranged on at least one of the same side as the side on which the inverter module INV is arranged and a side contiguous to the side on which the inverter module INV is arranged, with respect to the drive unit TA.

Further, also in the fourth example, as shown in FIG. 10, in the onboard state, the drive unit TA is arranged on the lower side Z2 with respect to the external connection port PT. In the fourth example, the high-voltage circuit unit 4 including the power supply module PWR is arranged on the front-rear-direction second side H2 and the width-direction first side (axial first side L1) with respect to the drive unit TA. Thus, the power supply module PWR can be arranged close to the external connection port PT. Therefore, it is easy to reduce the distance between the power supply module PWR and the external connection port PT, and it is easy to shorten the wiring lines connecting the power supply module PWR and the external connection port PT. In addition, it is easy to reduce the distance between the converter 61 included in the power supply module PWR and the low-voltage DC power supply B. Therefore, it is easy to shorten the wiring lines connecting the converter 61 and the low-voltage DC power supply B.

As shown in FIG. 10, in the fourth example, the high-voltage circuit unit 4 including the inverter module INV is arranged on the sides contiguous to the side on which the refrigerant circuit module 2 is arranged, with respect to the drive unit TA. Here, the high-voltage circuit unit 4 is arranged on two different sides contiguous to the side on which the refrigerant circuit module 2 is arranged, with respect to the drive unit TA. Although the arrangement position of the water-cooled condenser 31 (heat exchanger) is omitted, also in the fourth example, the water-cooled condenser 31 is preferably arranged in the region between the region in which the refrigerant circuit module 2 is arranged and the region in which the inverter module INV is arranged.

FIG. 11 shows a fifth example of the relative arrangement of the onboard member group. Also in the fifth example, in the onboard state, the drive unit TA is arranged on the front-rear-direction first side H1 with respect to the cabin air conditioning unit 45 and the onboard battery BT. Moreover, the refrigerant circuit module 2 is also arranged on the upper side Z1 with respect to the drive unit TA. The high-voltage circuit unit 4 including the inverter module INV is arranged on the front-rear-direction second side H2 with respect to the drive unit TA. The power supply module PWR included in the high-voltage circuit unit 4 is arranged on the same side as the side on which the inverter module INV is arranged, with respect to the drive unit TA.

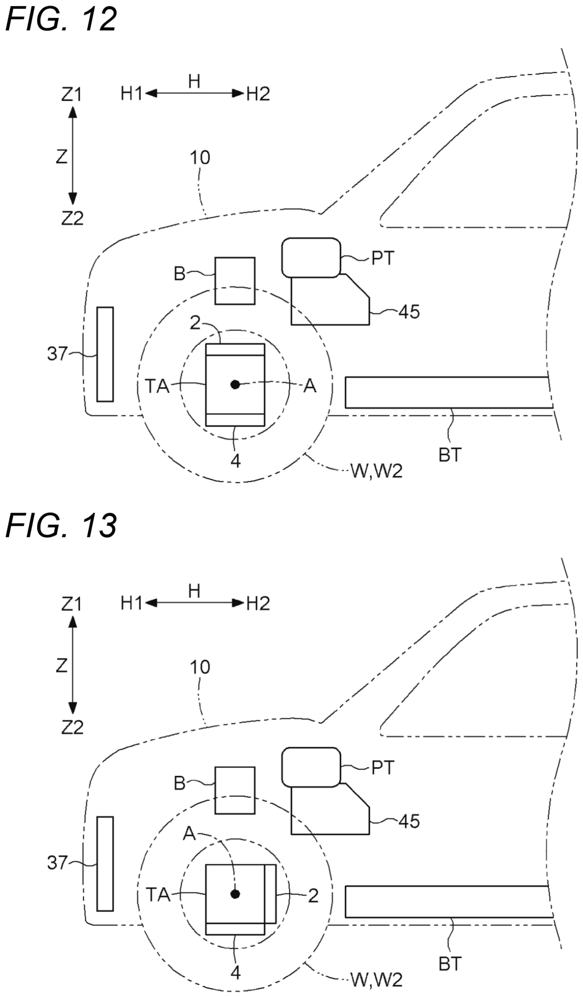

In the fifth example shown in FIG. 11 and the sixth example shown in FIG. 12, the refrigerant circuit module 2 is arranged on the upper side Z1 with respect to the drive unit TA, similarly to the first to fourth examples. On the other hand, in the fifth example and the sixth example, the positions at which the high-voltage circuit unit 4 is arranged with respect to the drive unit TA are different. However, what the fifth example and the sixth example have in common is that the high-voltage circuit unit 4 is arranged such that a distance between the high-voltage circuit unit 4 and the onboard battery BT is short and the wiring line length is short.

Further, also in the fifth example, as shown in FIG. 11, in the onboard state, the drive unit TA is arranged on the lower side Z2 with respect to the external connection port PT. In the fifth example, the high-voltage circuit unit 4 including the power supply module PWR is arranged on the front-rear-direction second side H2 with respect to the drive unit TA. That is, the power supply module PWR can be arranged close to the onboard battery BT. Therefore, it is possible to reduce the distance between the power supply module PWR and the onboard battery BT, and it is also easy to shorten the wiring lines connecting the power supply module PWR and the onboard battery BT. Note that the external connection port PT is arranged on the front-rear-direction second side H2 with respect to the drive unit TA, and thus it is easy to shorten the wiring lines connecting the power supply module PWR and the external connection port PT.

As shown in FIG. 11, in the fifth example, the high-voltage circuit unit 4 including the inverter module INV is arranged on a side contiguous to the side on which the refrigerant circuit module 2 is arranged, with respect to the drive unit TA. Although the arrangement position of the water-cooled condenser 31 (heat exchanger) is omitted, also in the fifth example, the water-cooled condenser 31 is preferably arranged in the region between the region in which the refrigerant circuit module 2 is arranged and the region in which the inverter module INV is arranged.

FIG. 12 shows a sixth example of the relative arrangement of the onboard member group. Also in the sixth example, in the onboard state, the drive unit TA is arranged on the front-rear-direction first side H1 with respect to the cabin air conditioning unit 45 and the onboard battery BT. Moreover, the refrigerant circuit module 2 is also arranged on the upper side Z1 with respect to the drive unit TA. The high-voltage circuit unit 4 including the inverter module INV and the power supply module PWR is arranged on the lower side Z2 with respect to the drive unit TA. The power supply module PWR is arranged on the same side as the side on which the inverter module INV is arranged, with respect to the drive unit TA.

Further, also in the sixth example, as shown in FIG. 12, in the onboard state, the drive unit TA is arranged on the lower side Z2 with respect to the external connection port PT. In the sixth example, the high-voltage circuit unit 4 including the power supply module PWR is arranged on the lower side Z2 with respect to the drive unit TA. That is, the power supply module PWR can be arranged close to the onboard battery BT. Therefore, it is possible to reduce the distance between the power supply module PWR and the onboard battery BT, and it is also easy to shorten the wiring lines connecting the power supply module PWR and the onboard battery BT.

As shown in the sixth example of FIG. 12, the high-voltage circuit unit 4 including the inverter module INV may be arranged on a side that is not the same side as the side on which the refrigerant circuit module 2 is arranged, and that is not a side contiguous to the side on which the refrigerant circuit module 2 is arranged, with respect to the drive unit TA.

Each of the first to sixth examples described above with reference to FIGS. 6 to 12 has exemplified the configuration in which the refrigerant circuit module 2 is arranged at the uppermost portion of the vehicle drive device 100 in the upper-lower direction Z. The seventh to tenth examples will be described below with reference to FIGS. 13 to 16. The seventh to tenth examples exemplify respective configurations in each of which the refrigerant circuit module 2 is arranged on the front-rear-direction second side H2 in the vehicle drive device 100, that is, on the front-rear-direction second side H2 with respect to the drive unit TA. The cabin air conditioning unit 45 is arranged on the front-rear-direction second side H2 with respect to the drive unit TA, and thus it is possible to shorten the pipes between the refrigerant circuit module 2 and the cabin air conditioning unit 45, also in each of the seventh to tenth examples. Note that the arrangement position of the refrigerant circuit module 2 is common in the seventh to tenth examples, but the arrangement positions of the high-voltage circuit unit 4 including the power supply module PWR are different from one another throughout the seventh to tenth examples. In each example, the arrangement position of the power supply module PWR is set by a relationship with the external connection port PT, the onboard battery BT, and the low-voltage DC power supply B.

FIG. 13 shows a seventh example of the relative arrangement of the onboard member group. Also in the seventh example, in the onboard state, the drive unit TA is arranged on the front-rear-direction first side H1 with respect to the cabin air conditioning unit 45 and the onboard battery BT. In the seventh example, the refrigerant circuit module 2 is arranged on the front-rear-direction second side H2 with respect to the drive unit TA. The high-voltage circuit unit 4 including the inverter module INV and the power supply module PWR is arranged on the lower side Z2 with respect to the drive unit TA. The power supply module PWR is arranged on the same side as the side on which the inverter module INV is arranged, with respect to the drive unit TA.

Further, also in the seventh example, as shown in FIG. 13, in the onboard state, the drive unit TA is arranged on the lower side Z2 with respect to the external connection port PT. In the seventh example, the high-voltage circuit unit 4 including the power supply module PWR is arranged on the lower side Z2 with respect to the drive unit TA. That is, the power supply module PWR can be arranged close to the onboard battery BT. Therefore, it is possible to reduce the distance between the power supply module PWR and the onboard battery BT, and it is also easy to shorten the wiring lines connecting the power supply module PWR and the onboard battery BT.

As shown in FIG. 13, the high-voltage circuit unit 4 including the inverter module INV is arranged on a side contiguous to the side on which the refrigerant circuit module 2 is arranged, with respect to the drive unit TA. Although the arrangement position of the water-cooled condenser 31 (heat exchanger) is omitted, also in the fifth example, the water-cooled condenser 31 is preferably arranged in the region between the region in which the refrigerant circuit module 2 is arranged and the region in which the inverter module INV is arranged.

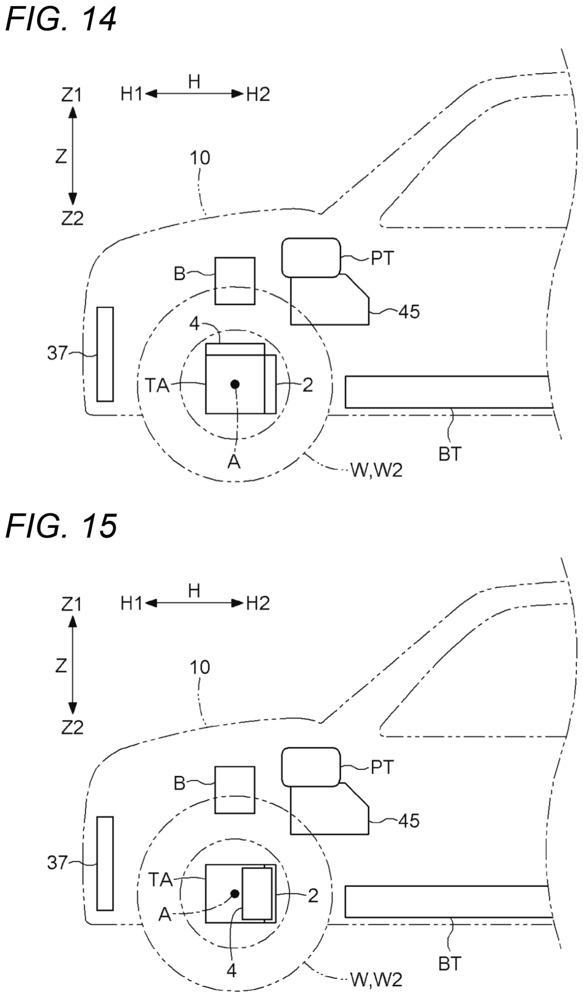

FIG. 14 shows an eighth example of the relative arrangement of the onboard member group. Also in the eighth example, in the onboard state, the drive unit TA is arranged on the front-rear-direction first side H1 with respect to the cabin air conditioning unit 45 and the onboard battery BT. Similarly to the seventh example, also in the eighth example, the refrigerant circuit module 2 is arranged on the front-rear-direction second side H2 with respect to the drive unit TA. The high-voltage circuit unit 4 including the inverter module INV and the power supply module PWR is arranged on the upper side Z1 with respect to the drive unit TA. The power supply module PWR is arranged on the same side as the side on which the inverter module INV is arranged, with respect to the drive unit TA.

Further, also in the eighth example, as shown in FIG. 14, in the onboard state, the drive unit TA is arranged on the lower side Z2 with respect to the external connection port PT. In the eighth example, the high-voltage circuit unit 4 including the power supply module PWR is arranged on the upper side Z1 with respect to the drive unit TA. Therefore, it is possible to reduce the distance between the power supply module PWR and the external connection port PT, and it is easy to shorten the wiring lines connecting the power supply module PWR and the external connection port PT. In addition, it is also easy to shorten wiring lines connecting the power supply module PWR and the low-voltage DC power supply B.

As shown in FIG. 14, the high-voltage circuit unit 4 including the inverter module INV is arranged on a side contiguous to the side on which the refrigerant circuit module 2 is arranged, with respect to the drive unit TA. Although the arrangement position of the water-cooled condenser 31 (heat exchanger) is omitted, also in the eighth example, the water-cooled condenser 31 is preferably arranged in the region between the region in which the refrigerant circuit module 2 is arranged and the region in which the inverter module INV is arranged.

FIG. 15 shows a ninth example of the relative arrangement of the onboard member group. Also in the ninth example, in the onboard state, the drive unit TA is arranged on the front-rear-direction first side H1 with respect to the cabin air conditioning unit 45 and the onboard battery BT. Similarly to the seventh example and the eighth example, also in the ninth example, the refrigerant circuit module 2 is arranged on the front-rear-direction second side H2 with respect to the drive unit TA. The high-voltage circuit unit 4 including the inverter module INV and the power supply module PWR is arranged on the width-direction first side (axial first side L1) with respect to the drive unit TA. The power supply module PWR is arranged on the same side as the side on which the inverter module INV is arranged, with respect to the drive unit TA.

Further, also in the ninth example, as shown in FIG. 15, in the onboard state, the drive unit TA is arranged on the lower side Z2 with respect to the external connection port PT. In the ninth example, the high-voltage circuit unit 4 including the power supply module PWR is arranged on the width-direction first side (axial first side L1) with respect to the drive unit TA. In a case where the power supply module PWR is arranged on the front-rear-direction second side H2 on the axial first side L1 with respect to the drive unit TA, the power supply module PWR can be arranged close to the external connection port PT. Therefore, it is possible to reduce the distance between the power supply module PWR and the external connection port PT. In addition, the power supply module PWR can also be arranged close to the onboard battery BT, and thus it is possible to reduce the distance between the power supply module PWR and the onboard battery BT, and it is easy to shorten the wiring lines connecting the power supply module PWR and the onboard battery BT.

As shown in FIG. 15, the high-voltage circuit unit 4 including the inverter module INV is arranged on a side contiguous to the side on which the refrigerant circuit module 2 is arranged, with respect to the drive unit TA. Although the arrangement position of the water-cooled condenser 31 (heat exchanger) is omitted, also in the ninth example, the water-cooled condenser 31 is preferably arranged in the region between the region in which the refrigerant circuit module 2 is arranged and the region in which the inverter module INV is arranged.

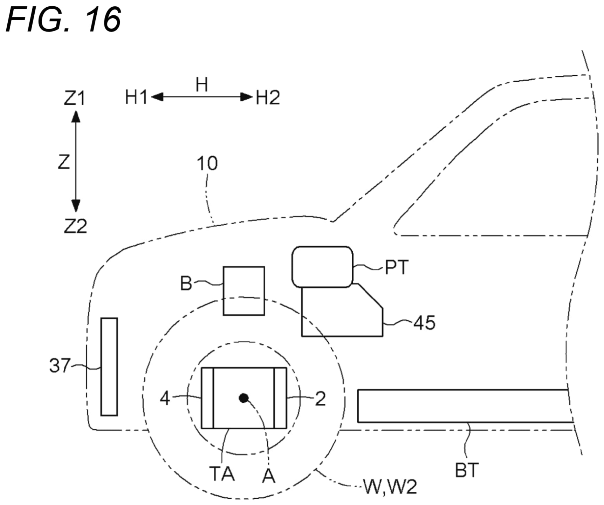

FIG. 16 shows a tenth example of the relative arrangement of the onboard member group. Also in the tenth example, in the onboard state, the drive unit TA is arranged on the front-rear-direction first side H1 with respect to the cabin air conditioning unit 45 and the onboard battery BT. Similarly to the seventh to ninth examples, the refrigerant circuit module 2 is arranged on the front-rear-direction second side H2 with respect to the drive unit TA. However, the high-voltage circuit unit 4 including the inverter module INV and the power supply module PWR is arranged on the front-rear-direction first side H1 with respect to the drive unit TA. The power supply module PWR is arranged on the same side as the side on which the inverter module INV is arranged, with respect to the drive unit TA.

Also in the tenth example, as shown in FIG. 16, in the onboard state, the drive unit TA is arranged on the lower side Z2 with respect to the external connection port PT. In the tenth example, the high-voltage circuit unit 4 including the power supply module PWR is arranged on the front-rear-direction first side H1 with respect to the drive unit TA. In a case where the power supply module PWR is arranged on the upper side Z1, on the front-rear-direction first side H1 with respect to the drive unit TA, the power supply module PWR can be arranged close to the low-voltage DC power supply B, with reference to the drive unit TA. Therefore, it is possible to reduce the distance between the power supply module PWR and the low-voltage DC power supply B.

As shown in the tenth example of FIG. 16, the high-voltage circuit unit 4 including the inverter module INV may be arranged on a side that is not the same side as the side on which the refrigerant circuit module 2 is arranged, and that is not a side contiguous to the side on which the refrigerant circuit module 2 is arranged, with respect to the drive unit TA.

Other embodiments will be described below. Note that the configurations of the embodiments described below are not limited to those applied separately, and can be applied in combination with the configurations of other embodiments as long as no contradiction arises.
(1) In the above description, a configuration has been exemplified in which the speed reducer 6 and the differential gear mechanism 5 are provided as the power transmission mechanism GT. However, the configuration of the power transmission mechanism GT is not limited to such a configuration. The power transmission mechanism GT may have a configuration including only the differential gear mechanism 5 without including the speed reducer 6, for example. In addition, the power transmission mechanism GT may have a configuration that includes only the speed reducer 6 without including the differential gear mechanism 5, and in which motive power from one rotary electric machine MG is transmitted to one wheel W. Further, in the present embodiment, the planetary gear mechanism having a fixed speed ratio has been exemplified as the speed reducer 6. However, the speed reducer 6 may have a plurality of speed ratios.
(2) As shown in FIG. 5, in a configuration in which the DC link capacitor 16 is arranged side by side with the inverter circuit PM on the cooling unit first face 38a, the DC link capacitor 16 may be included in the inverter module INV. However, for example, in a case where the DC link capacitor 16 is arranged on a reverse side of the cooling unit first face 38a, the DC link capacitor 16 need not be included in the inverter module INV.

### [Summary of Present Embodiment]

The vehicle drive device (100) described above will be briefly summarized below.

As one aspect, a vehicle drive device (100) includes: a rotary electric machine (MG) including a rotor (12); an output member (52, 53, 53, DS1, DS2) drivingly coupled to a wheel (W); a power transmission mechanism (GT) configured to transmit drive power between the rotary electric machine (MG) and the output member (52, 53, 53, DS1, DS2); an inverter module (INV) for performing drive control on the rotary electric machine (MG); a power supply module (PWR) electrically connected to an onboard battery (BT), the power supply module (PWR) including at least one of a voltage conversion circuit configured to convert a voltage of the onboard battery (BT), a charging circuit for charging the onboard battery (BT) from an external power supply (60), and a feeding circuit for feeding electric power from the onboard battery (BT) to an outside; a refrigerant circuit module (2) forming at least a part of a refrigerant circuit (20) through which a refrigerant for an onboard air conditioner is allowed to circulate; and a case (9) that houses a drive unit (TA) including the rotary electric machine (MG) and the power transmission mechanism (GT), and that supports the inverter module (INV), the power supply module (PWR), and the refrigerant circuit module (2), in which: in a state of being mounted on a vehicle (10), the drive unit (TA) is arranged on a front-rear-direction first side (H1) that is one side in a vehicle front-rear direction (H), with respect to a cabin air conditioning unit (45) of the onboard air conditioner, and the onboard battery (BT) arranged under a floor of a cabin of the vehicle (10); a side opposite to the front-rear-direction first side (H1), in the vehicle front-rear direction (H) is defined as a front-rear-direction second side (H2), a direction orthogonal to the vehicle front-rear direction (H) as viewed in an upper-lower direction (Z) is defined as a width direction (L), one side in the width direction (L) is defined as a width-direction first side (L1), and another side in the width direction (L) is defined as a width-direction second side (L2); the refrigerant circuit module (2) is arranged on an upper side (Z1) or the front-rear-direction second side (H2) with respect to the drive unit (TA); the inverter module (INV) is arranged on at least any one side of the upper side (Z1), a lower side (Z2), the front-rear-direction second side (H2), the width-direction first side (L1), and the width-direction second side (L2) with respect to the drive unit (TA); and the power supply module (PWR) is arranged on at least any one side of the upper side (Z1), the lower side (Z2), the front-rear-direction second side (H2), the width-direction first side (L1), and the width-direction second side (L2) with respect to the drive unit (TA), the at least any one side being a same side as a side on which the inverter module (INV) is arranged, or a side contiguous to a side on which the inverter module (INV) is arranged, with respect to the drive unit (TA).

According to this configuration, there is provided the vehicle drive device (100) in which not only is the inverter module (INV), for performing drive control on the rotary electric machine (MG), provided integrally with the drive unit (TA) including the rotary electric machine (MG) and the power transmission mechanism (GT), but also the power supply module (PWR) and the refrigerant circuit module (2), through which the refrigerant for the onboard air conditioner circulates, are provided integrally with the drive unit (TA). Therefore, it is possible to reduce the number of wiring lines, pipes, or the like connecting a unit formed of the drive unit (TA) and the inverter module (INV) and each of the power supply module (PWR) and the refrigerant circuit module (2). In addition, by allowing not only the drive unit (TA) and the inverter module (INV) but also the power supply module (PWR) and the refrigerant circuit module (2) to be integrally supported by the case (9), it is possible to obtain the vehicle drive device (100) integrated while being provided with many functions, and it is also easy to make compact the entire onboard member group including the vehicle drive device (100) as a core. Further, the cabin air conditioning unit (45) is often typically arranged on the upper side (Z1) with respect to the drive unit (TA), in relation to introduction of outside air and supply of air into the vehicle interior. According to this configuration, the refrigerant circuit module (2) is arranged on the upper side (Z1) with respect to the drive unit (TA), or on the front-rear-direction second side (H2) on which the cabin air conditioning unit (2) is arranged, with respect to the drive unit (TA), it is easy to reduce a distance between the refrigerant circuit module (2) and the cabin air conditioning unit (45), and it is easy to shorten pipes connecting the refrigerant circuit module (2) and the cabin air conditioning unit (45). In addition, according to this configuration, the inverter module (INV) and the power supply module (PWR) are arranged on a side other than the front-rear-direction first side (H1) that is a side opposite to the side on which the onboard battery (BT) is arranged, with respect to the drive unit (TA). Therefore, it is easy to reduce a distance between each of the inverter module (INV) and the power supply module (PWR) and the onboard battery (BT), and it is also easy to shorten wiring lines connecting each of the inverter module (INV) and the power supply module (PWR) and the onboard battery (BT). Further, according to this configuration, since the power supply module (PWR) is arranged on the same side as the side on which the inverter module (INV) is arranged, or the side contiguous to the side on which the inverter module (INV) is arranged, it is also easy to shorten wiring lines connecting the power supply module (PWR) and the inverter module (INV). That is, according to this configuration, it is easy to shorten pipes or wiring lines connecting the vehicle drive device (100) and each of the cabin air conditioning unit (45) and the onboard battery (BT). Therefore, according to this configuration, it is easy to configure the entire onboard member group including the vehicle drive device (100) as a core and including the onboard air conditioner and the onboard battery (BT) to be compact.

Further, in the vehicle drive device (100), preferably, in the state of being mounted on the vehicle (10), the drive unit (TA) is arranged on the lower side (Z2) with respect to an external connection port (PT), provided on the vehicle (10), for electrical connection between the vehicle (10) and an outside, and the power supply module (PWR) is arranged on at least any one side of the upper side (Z1), the front-rear-direction second side (H2), the width-direction first side (L1), and the width-direction second side (L2) with respect to the drive unit (TA).

According to this configuration, it is easy to reduce a distance between the power supply module (PWR) and the external connection port (PT), and it is easy to shorten the wiring lines connecting the power supply module (PWR) and the external connection port (PT).

Further, preferably, the vehicle drive device (100) further includes a water pump configured to cause cooling water for cooling at least one of the rotary electric machine (MG) and the inverter module (INV) to circulate, in which, in the state of being mounted on the vehicle (10), the drive unit (TA) is arranged on the front-rear-direction second side (H2) with respect to a radiator (37) configured to exchange heat between the cooling water and outside air, and the water pump (36) is arranged on the front-rear-direction first side (H1) with respect to the drive unit (TA), and is supported by the case (9).

When the water pump (36) causes the cooling water to circulate, at least one of the rotary electric machine (MG) and the inverter module (INV) can be appropriately cooled. In addition, by arranging the water pump (36) on the side of the radiator (37) with respect to the drive unit (TA), it is easy to reduce a distance between the radiator (37) and the water pump (36), and it is easy to shorten pipes connecting the radiator (37) and the water pump (36).

Further, preferably, the vehicle drive device (100) further includes a heat exchanger (31) configured to exchange heat between cooling water for cooling at least the inverter module (INV) and the refrigerant, in which the inverter module (INV) is arranged on a same side as a side on which the refrigerant circuit module (2) is arranged, or a side contiguous to a side on which the refrigerant circuit module (2) is arranged, with respect to the drive unit (TA), and the heat exchanger (31) is arranged in a region between a region in which the refrigerant circuit module (2) is arranged and a region in which the inverter module (INV) is arranged.

By arranging the inverter module (INV) with respect to the refrigerant circuit module (2) in this manner, it is easy to reduce a distance between the inverter module (INV) and the refrigerant circuit module (2), and it is easy to shorten pipes forming the respective flow passages of the refrigerant circulating through the refrigerant circuit module (2) and the cooling water for cooling the inverter module (INV). In addition, since the heat exchanger (31) is arranged in the region between the region in which the refrigerant circuit module (2) is arranged and the region in which the inverter module (INV) is arranged, it is easy to shorten both the flow passage connecting the refrigerant circuit module (2) and the heat exchanger and the flow passage connecting the inverter module (INV) and the heat exchanger, and it is also easy to shorten pipes forming the flow passages.

### REFERENCE SIGNS LIST

2: Refrigerant circuit module, 4: High-voltage circuit unit (inverter module, power supply module), 9: Case, 10: Vehicle, 12: Rotor, 20: Refrigerant circuit, 31: Water-cooled condenser (heat exchanger), 36: First water pump (water pump), 37: Radiator, 45: Cabin air conditioning unit, 52: Side gear (output member), 53: First side gear (output member), 54: Second side gear (output member), 60: External power supply, 100: Vehicle drive device, BT: Onboard battery, DS1: First drive shaft (output member), DS2: Second drive shaft (output member), GT: Power transmission mechanism, H: Vehicle front-rear direction, H1: Front-rear-direction first side, H2: Front-rear-direction second side, INV: Inverter module, L: Axial direction (width direction), L1: Axial first side (width-direction first side), L2: Axial second side (width-direction second side), MG: Rotary electric machine, PT: External connection port, PWR: Power supply module, TA: Drive unit, W: Wheel, Z: Upper-lower direction, Z1: Upper side, and Z2: Lower side

## Claims

1. A vehicle drive device comprising:
a rotary electric machine including a rotor;
an output member drivingly coupled to a wheel;
a power transmission mechanism configured to transmit drive power between the rotary electric machine and the output member;
an inverter module for performing drive control on the rotary electric machine;
a power supply module electrically connected to an onboard battery, the power supply module including at least one of a voltage conversion circuit configured to convert a voltage of the onboard battery, a charging circuit for charging the onboard battery from an external power supply, and a feeding circuit for feeding electric power from the onboard battery to an outside;
a refrigerant circuit module forming at least a part of a refrigerant circuit through which a refrigerant for an onboard air conditioner is allowed to circulate; and
a case that houses a drive unit including the rotary electric machine and the power transmission mechanism, and that supports the inverter module, the power supply module, and the refrigerant circuit module,
wherein
in a state of being mounted on a vehicle, the drive unit is arranged on a front-rear-direction first side that is one side in a vehicle front-rear direction, with respect to a cabin air conditioning unit of the onboard air conditioner, and the onboard battery arranged under a floor of a cabin of the vehicle,
a side opposite to the front-rear-direction first side, in the vehicle front-rear direction is defined as a front-rear-direction second side, a direction orthogonal to the vehicle front-rear direction as viewed in an upper-lower direction is defined as a width direction, one side in the width direction is defined as a width-direction first side, and another side in the width direction is defined as a width-direction second side,
the refrigerant circuit module is arranged on an upper side or the front-rear-direction second side with respect to the drive unit,
the inverter module is arranged on at least any one side of the upper side, a lower side, the front-rear-direction second side, the width-direction first side, and the width-direction second side with respect to the drive unit, and
the power supply module is arranged on at least any one side of the upper side, the lower side, the front-rear-direction second side, the width-direction first side, and the width-direction second side with respect to the drive unit, the at least any one side being a same side as a side on which the inverter module is arranged, or a side contiguous to a side on which the inverter module is arranged, with respect to the drive unit.

2. The vehicle drive device according to claim 1, wherein
in the state of being mounted on the vehicle, the drive unit is arranged on the lower side with respect to an external connection port, provided on the vehicle, for electrical connection between the vehicle and an outside, and
the power supply module is arranged on at least any one side of the upper side, the front-rear-direction second side, the width-direction first side, and the width-direction second side with respect to the drive unit.

3. The vehicle drive device according to claim 1 or 2, further comprising:
a water pump configured to cause cooling water for cooling at least one of the rotary electric machine and the inverter module to circulate,
wherein
in the state of being mounted on the vehicle, the drive unit is arranged on the front-rear-direction second side with respect to a radiator configured to exchange heat between the cooling water and outside air, and
the water pump is arranged on the front-rear-direction first side with respect to the drive unit, and is supported by the case.

4. The vehicle drive device according to claim 1 or 2, further comprising:
a heat exchanger configured to exchange heat between cooling water for cooling at least the inverter module and the refrigerant,
wherein
the inverter module is arranged on a same side as a side on which the refrigerant circuit module is arranged, or a side contiguous to a side on which the refrigerant circuit module is arranged, with respect to the drive unit, and
the heat exchanger is arranged in a region between a region in which the refrigerant circuit module is arranged and a region in which the inverter module is arranged.
